# EUROPEAN PATENT APPLICATION

(11) **EP 2 565 886 A1**
(43) Date of publication of application: **06.03.2013**
(21) Application number: 12194162.9
(22) Date of filing: 09.05.2005
(51) Int. Cl.: H01G 9/035, C07D 207/16, C07D 233/28, H01M 10/052, H01M 10/0567, H01M 10/0568, H01M 10/0569, H01G 11/06, H01G 11/62

(54) **Material for electrolytic solution, ionic material-containing composition and use thereof**

(30) Priority: 10.05.2004 JP 2004140384; 14.05.2004 JP 2004145161; 17.12.2004 JP 2004366537; 27.12.2004 JP 2004376882; 05.01.2005 JP 2005000628
(62) Divisional of application: 05739348.0
(71) Applicant: Nippon Shokubai Co., Ltd., Osaka-shi, Osaka 541-0043 (JP)
(72) Inventor: Mizuta, Keiichiro, Hyogo Hyogo 674-0051 (JP); Takebe, Keiko, Osaka-shi Osaka 537-0011 (JP)
(74) Representative: Hart-Davis, Jason

(57) **Abstract**

An object of the present invention is to provide a material for an electrolytic solution having improved ionic conductivity and, showing excellent in low temperature property, being stable with time, and being electrochemically stable at a high potential, and an ionic material-containing composition exhibiting excellent fundamental performance such as electrochemical stability, and preferably used in a variety of utilities. Another object of the present invention is to provide utilities thereof.

The material for an electrolytic solution is the material containing an ionic compound, and the material comprises a cyano group-containing anion represented by the formula (1) ; 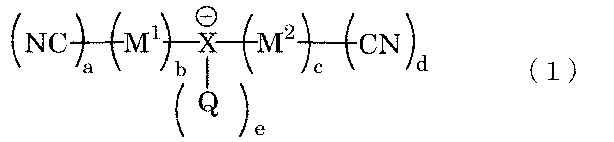 , and 1 to 99% by mass of a solvent in 100% by mass of the material for an electrolytic solution.

## Description

### TECHNICAL FIELD

The present invention relates to a material for electrolytic solutions, an ionic material-containing composition and use thereof. More particularly, the present invention relates to a material for electrolytic solutions which can judiciously be used in electrolytic solutions serving as ionic conductors in electrochemical devices; a composition containing an ionic material consisted of a cation and an anion; an ionic-conducting material including the composition and suitable for materials of ionic conductors; and the use applications using the material for electrolytic solutions and the ionic-conducting material, such as lithium secondary batteries, electrolytic condensers, electric double layer capacitors, and the like.

### BACKGROUND ART

Materials for electrolytic solutions are widely used in various cells or batteries in which the phenomenon of ionic conduction is utilized, for example in primary cells or batteries, lithium (ion) secondary batteries, fuel cells and other cells or batteries having charge and discharge mechanisms as well as in electrolytic condensers, electric double layer capacitors, solar cells, electrochromic display devices and other electrochemical devices. In these, each cell is generally constituted of a pair of electrodes and an electrolytic solution occurring therebetween and serving as an ionic conductor.

Ionic materials comprise a compound composed of a cation and an anion. Among these, substances having ionic conductivity are preferably used as ion-conducting materials in constituent materials of ionic conductors which are essential in various ion conductive cells. Constituent materials of ionic conductors can function as an electrolyte and/or a solvent in electrolytic solutions constituting the ionic conductors, or can function as a solid electrolyte. Examples of utilities thereof may include the same utilities as those of the above-mentioned electrolytic solution materials.

Currently used as such ionic conductor are electrolytic solutions prepared by dissolving an electrolyte, such as lithium perchlorate, LiPF₆, LiBF₄, tetraethylammonium fluoroborate or tetramethylammonium phthalate, in an organic solvent such as γ-butyrolactone,N,N-dimethylformamide,propylene carbonate or tetrahydrofuran. In such ionic conductors, the electrolyte, when dissolved, dissociates into a cation and an anion to cause ionic conduction through the electrolytic solution.

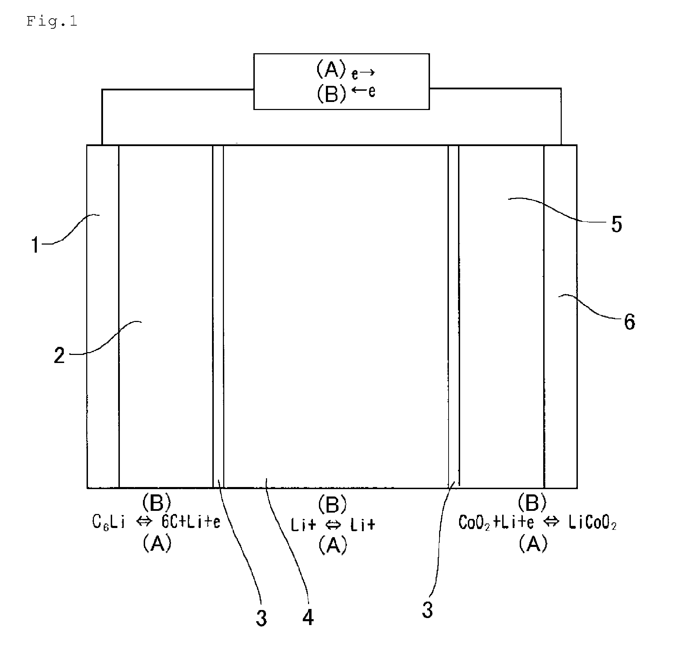

The form of a typical lithium (ion) secondary battery is schematically shown, in cross section, in Fig. 1. Such a lithium (ion) secondary battery has a positive electrode and a negative electrode each formed of a respective active substance, and an electrolytic solution constituted of an organic solvent and a lithium salt, such as LiPF₆, dissolved as a solute in the solvent forms an ionic conductor between the positive and negative electrodes. In that case, during charging, the reaction C₆Li → 6C + Li + e occurs on the negative electrode, the electron (e) generated on the negative electrode surface migrates through the electrolytic solution to the positive electrode surface in the manner of ionic conduction. On the positive electrode surface, the reaction CoO₂ + Li + e → LiCoO₂ occurs and an electric current flows from the negative to the positive electrode. During discharging, reverse reactions as compared with those during charging occur, and an electric current runs from the positive to the negative electrode.

However, such an electrolytic solution, which constitutes an electrochemical device, has needs to be improved in some view points; the organic solvent is readily volatile and has a low flash point, the electrolytic solutions coagulate and fail to show the performance at low temperatures as electrolytic solutions, and a liquid leak may readily occur, hence the reliability in long-term use. Thus, materials which may bring about improvements in these respects have been demanded.

Consequently, the investigations of an ordinary temperature molten salt, which occurs as a liquid at room temperature is done (e.g. refer to Koura et al. : J. Electrochem. Soc. (USA), (1993) vol. 140, page 602). As ordinary temperature molten salts, complexes between aromatic quaternary ammonium halide such as an N-butylpyridinium, N-ethyl-N'-methylimidazolium or like, and an aluminum halide as well as mixtures of two or more lithium salts are known (refer to C. A. Angell et al. : Nature (UK), (1933) vol. 362, page 137). However, the former complexes have a problem of corrosion by halide ions, while the latter complexes are thermodynamically unstable supercooled liquids and have a problem in that they solidify with the lapse of time.

On the other hand, imidazolium or pyridium salts of tetrafluoroborate anion, bistrifluoromethanesulfonylimide anion or the like are relatively stable from the electrical viewpoint and have recently become targets of close investigation. However, they are unsatisfactory in performance, for example ionic conductivity and, due to their containing fluorine, they cause the problem of electrode corrosion, for instance. Thus, there is a room for contrivance for providing ion-conducting material improved in fundamental performance.

Douglas R. MacFarlane et al., Chem. Commun. (UK), (2001) pp. 1430-1431, who studies the thermal characteristics, viscosity and qualitative potential stability of N-alkyl-N-methylpyrrolidinium or 1-alkyl-3-methylimidazolium dicyanamide salts, discloses that such dicyanamide salts are useful as low-viscosity ionic liquids. However, there is no disclosure about the technology of applying such dicyanamide salts as ion-conducting material in electrochemical devices. Thus, there is a room for contrivance for providing ion-conducting material improved in fundamental performance.

Japan Kohyo Publication No. 2002-523879 (pages 1 to 7 and 30 to 43), which is concerned with cyano-substituted salts including cyano-substituted methides and amides, discloses an electrolyte comprising a matrix material and at least one salt selected from the group consisting of N-cyano-substituted amides, N-cyano-substituted sulfonamides, 1,1,1-dicyano-substituted sulfonylmethides and 1,1,1-dicyanoacylmethides. For obtaining this electrolyte, a powder form of such a salt is prepared and this is dissolved in an organic solvent, which is a matrix material, to give a liquid electrolyte, or used to give a solid polymer electrolyte. In the pamphlet of Laid-open International Patent Application WO 01/15258 (pages 14-17), which is concerned with solid conductive materials containing an ionic dopant to serve as a conductive species in an organic matrix, there is disclosed, among others, a material in which N-methyl-N-propylpyrrolidinium dicyanamide salt is used as the organic matrix and LiSO₃CF₃ as the ionic dopant. However, these technologies do not include any disclosure about the application of such a compound in salt form as a material in electrolytic solutions to serve as excellent ionic conductors in electrochemical devices and about the use of such salt itself in a liquid form.

Japan Kohyo Publication No. 2000-508677 (pages 1-12), which is concerned with ionic compounds containing an anionic moiety bound to a cationic moiety M^{+m}, discloses that those ionic compounds in which the cationic moiety M is hydroxonium, nitrosonium NO⁺, ammonium NH₄⁺, a metal cation having a valency of m, an organic cation having a valency of m or an organometallic cation having a valency of m and the anionic moiety corresponds to the formula R_{D}-Y-C(C≡N)₂⁻ or Z-C(C≡N)₂⁻ can be used as ion-conducting material, for instance. However, there is a room for contrivance for modifying them to provide materials suited for use in constituting electrolytic solutions showing excellent basic performance.

Japanese Patent No. 3182793 (pages 1, 5-8), which is concerned with a molten salt-type electrolyte for driving electrolytic condensers, discloses that electrolyte salts comprising a nitrogen-containing heterocyclic cation having a conjugated double bond or a nitrogen-containing fused heterocyclic cation having a conjugated double bond are melted or melted and solidified without using a solvent. There is described that this electrolyte is used in electrolytic condensers and, as an anion, a carboxylic acid ion is used. However, there is no disclosure of a temperature of conductivity which is a performance factor important as an electrolytic solution of electrochemical devices, and since performance of ionic conductivity or the like is not sufficient, there is a room for contrivance to obtain materials constituting ionic conductors exhibiting excellent fundamental performance.

Japanese Kokai Publication No. 2004-127774 (pages 2, 3), which is concerned with materials for ionic conductors, discloses a material for ionic conductors which includes a particular anion as an essential component, and an ionic material having a water content of 200 ppm or less. This material for ionic conductors has ionic conductivity excellent in use for electrochemical devices and, moreover, has suppressed corrosivity on an electrode and the like, is stable with the lapse of time, and can be preferably used in various electric devices. However, there is a room for contrivance for exerting further sufficient electrochemical stability even in such utilities that water is taken into electrochemical devices, and realizing preferable use in more utilities.

### DISCLOSURE OF INVENTION

The present invention has been achieved in view of the above-mentioned circumstances, and an object of the present invention is to provide a material for electrolytic solutions which has improved ionic conductivity and, shows excellent properties at low temperatures, is stable with the lapse of time, and is electrochemically stable at a high potential, and an ionic material-containing composition which can exhibit excellent fundamental performance such as electrochemical stability, and can be preferably used in a variety of utilities. Another object of the present invention is to provide an ion-conducting material containing such an ionic material-containing composition, and a lithium secondary battery, an electrolytic condenser and an electric double layer capacitor using these material for electrolytic solutions and ion-conducting material.

The present inventors made various investigations to develop a material constituting an electrolytic solution, which is an ionic conductor, and as a result, paid their attention to the fact that an ionic conductor in liquid form, which is prepared by dissolving an electrolyte in a molten salt is useful, since the salt form no more shows volatility and can be handled safely. Then, the present inventors found out that (A) when an anion having a particular structure is comprised, ionic conductivity is excellent, this becomes preferable in materials constituting ionic conductors, and that when a content of a solvent is specified, both improvement in a problem in volatilization of a solvent and advancement in ionic conductivity can be sufficiently realized. Usually, when a content of a solvent is small in a material for an electrolytic solution, for example, the material is frozen at a low temperature of -55°C, ionic conductivity cannot be measured in some cases. However, it was found out that, by adopting such a form, a volatile matter is reduced, and excellent ionic conductivity is obtained without freezing at low temperatures, and that when the material constitutes an electrolytic solution, excellent fundamental performance can be exhibited. In addition, it was found out that, by (B) adopting a form containing two or more species of ionic liquids, even an ionic liquid, which is solidified alone at low temperatures and cannot be measured in ionic conductivity in some cases, can be excellent in ionic conductivity and, by including of ionic liquids having particular combination, or by having ionic conductivity above a particular range at a particular temperature, this material is suitable for a material constituting ionic conductors, thereby resulting in successful solution of the above-mentioned problems.

It was found out, when these materials have no fluorine atom, this allows corrosivity on an electrode and the like to be suppressed, and permits stably function with the lapse of time, thus, these materials function as a liquid material constituting an electrolytic solution, and become suitable for electrochemical devices. Further, it was also found that, by adopting a form having an anion and a cation of a particular structure, a normal temperature molten salt which stably retains the molten state at a normal temperature is obtained, volatilization to the outside at high temperatures can be suppressed, and those materials become a further suitable material constituting an electrolytic solution, which can endure for a prolonged period, of electrochemical devices.

In addition, the present inventors variously studied an ionic material-containing composition which is suitably used for a material constituting an electrolytic solution, found out that its electrochemical property depends on a purity of impurities, and found out that, when a content of impurities in ionic materials comprised in the composition is specified, better electrochemical stability is exhibited. Then, it was found out that, in such the ionic material, by (C-1) adopting a form comprising an anion having a particular structure, in which a moisture content is specified, or by (C-2) adopting a form comprising a tricyanomethide anion, stability is further improved, and sufficient electrochemical stability can be exhibited also in utilities where water is taken into electrochemical devices, and it was found out that, in the above-mentioned ionic material, also by (C-3) adopting a form in which a viscosity at 40°C exhibits a specified value, and a water amount is specified, the similar action and effect can be exhibited, resulting in successful solution of the above-mentioned problems.

The present inventors further found out that the above-mentioned material for an electrolytic solution, and the above-mentioned ion-conducting material comprising a composition containing the ionic material are particularly useful as materials constituting electrochemical devices such as a lithium secondary battery, an electrolytic condenser, and an electric double layer capacitor, leading to the present invention.

That is, the present invention is the following material for an electrolytic solution, composition containing an ionic material (this composition is referred to also as "an (the) ionic material-containing composition".), ion-conducting material and use thereof (lithium secondary battery, electrolytic condenser and electric double layer capacitor), and all of the following materials for an electrolytic solution and ionic material-containing compositions are effective for constituting ionic conductors excellent in electrochemical stability. Additionally, the term of "%" means percent.
(1) A material for an electrolytic solution containing an ionic compound,
   which comprises a cyano group-containing anion represented by the formula (1); 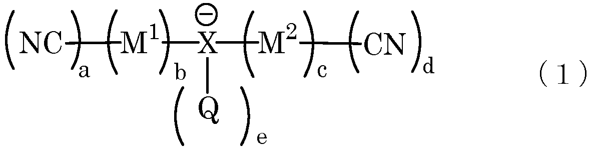 , in the formula, X represents at least one element selected from among B, C, N, 0, Al, Si, P, S, As and Se; M¹ and M² are the same or different and each represents an organic linking group; Q represents an organic group; a is an integer of not less than 1, and b, c, d and e each independently is an integer of not less than 0, and 1 to 99% by mass of a solvent in 100% by mass of the material for an electrolytic solution.
(2) A material for an electrolytic solution containing two or more species of ionic liquids,
   which comprises an ammonium cation having no unsaturated bond, an ammonium cation having an unsaturated bond, and an anion represented by the formula (1); 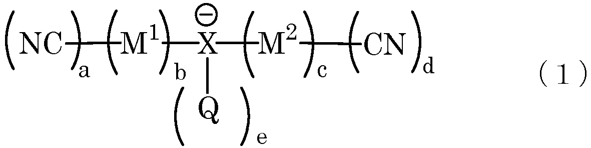 , in the formula, X represents at least one element selected from among B, C, N, 0, Al, Si, P, S, As and Se; M¹ and M² are the same or different and each represents an organic linking group; Q represents an organic group; a is an integer of not less than 1, and b, c, d and e each independently is an integer of not less than 0.
(3) A material for an electrolytic solution containing two or more species of ionic liquids,
   which comprises at least two species of ammonium cations having no unsaturated bond,
   wherein any one or both of two species of the saturated alkylammonium cation has a cyclic structure.
(4) A material for an electrolytic solution containing two or more species of ionic liquids,
   which comprises
   at least two species of ammonium cations having an unsaturated bond, anions to be paired with the cations being different species; and
   an anion represented by the formula (1); 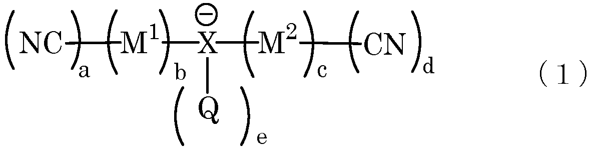 , in the formula, X represents at least one element selected from among B, C, N, 0, Al, Si, P, S, As and Se; M¹ and M² are the same or different and each represents an organic linking group; Q represents an organic group; a is an integer of not less than 1, and b, c, d and e each independently is an integer of not less than 0.
(5) A material for an electrolytic solution containing two or more species of ionic liquids,
   which has 1 × 10⁻⁶ S/cm or more of ionic conductivity at -55°C.
(6) A material for an electrolytic solution containing one or two or more species of ionic liquids,
   which has 20% or more of a peak current reduction ratio at third cycle or later at voltage application in cyclic voltammetry measurement.
(7) A composition containing an ionic material,
   wherein the ionic material comprises an anion represented by the formula (1); 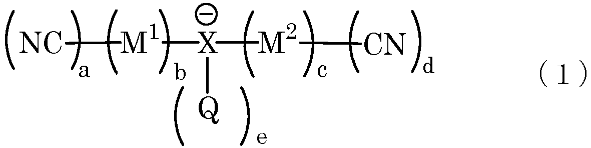 , in the formula, X represents at least one element selected from among B, C, N, 0, Al, Si, P, S, As and Se; M¹ and M² are the same or different and each represents an organic linking group; Q represents an organic group; a is an integer of not less than 1, and b, c, d and e each independently is an integer of not less than 0,
   impurity content in said ionic material is not more than 0.1% by mass and moisture content in said ionic material is 0.05 to 10% by mass.
(8) A composition containing an ionic material,
   wherein the ionic material comprises a tricyanomethide anion,
   impurity content in said ionic material is not more than 0.1% by mass.
(9) A composition containing an ionic material,
   wherein, at 40°C, the ionic material is a liquid state of 200 mPa·s or less,
   impurity content in said ionic material is not more than 0.1% by mass and moisture content in said ionic material is 0.05 to 10% by mass.
(10) An ion-conducting material comprising the composition containing an ionic material.
(11) A lithium secondary battery, an electrolytic condenser or an electric double layer capacitor, using the material for an electrolytic solution or the ion-conducting material.

In the following, the present invention is described in detail.

The material for an electrolytic solution of the present invention has at least one form of the following forms (A) and (B), and may have a form of a combination of these two or more forms.

Form (A) : (A) a form comprising the anion represented by the formula (1), and containing a solvent at 1 to 99% by mass in 100% by mass of the material for an electrolytic solution.

Form (B) : (B-1) a form containing two or more species of ionic liquids, in which an ammonium cation having no unsaturated bond and an ammonium cation having an unsaturated bond are contained, and the anion represented by the formula (1) is contained, (B-2) a form containing two or more species of ionic liquids, in which at least two species of ammonium cations having no unsaturated bond are contained, and any one or both of them have a ring (cyclic) structure, (B-3) a form containing two or more species of ionic liquids, in which at least two species of ammonium cations having an unsaturated bond are contained, and anions to be paired with the cations are different sprcies, and the anion represented by the formula (1) is contained, (B-4) a form containing two or more species of ionic liquids, in which ionic conductivity at -55°C is 1 × 10⁻⁶ S/cm or more, (B-5) a form containing one or two or more species of ionic liquids, in which a peak current reduction ratio at third cycle or later at voltage application in cyclic voltammetry measurement is 20% or more.

In the above-mentioned (A), (B-1) and (B-3) forms, the anion represented by the formula (1) may be or not may be an anion constituting the ionic compound or the ionic liquid. In addition, also in materials for an electrolytic solution of other forms, by adopting a form having the anion represented by the formula (1), materials can be excellent in ionic conductivity, and suitable for materials constituting ionic conductors.

In the (B-1) to (B-3) forms, other cations and the like except for cations in each form may be contained.

In addition, by adopting the (B-5) form, withstand voltage property can be sufficiently exhibited, and electrochemically more stable ionic conductors can be obtained and, further, by adopting a form of a combination of any one or more of the (A) and (B-1) to (B-4) forms, and the (5) form, an electrolytic solution having both better ionic conductivity and withstand voltage can be obtained, and the materials can be more suitable as materials constituting ionic conductors.

In the present invention, the material for an electrolytic solution is a material preferably used as a medium (solvent) and/or an electrolyte, which is a material for constituting electrolytic solutions in electrochemical devices. The material for an electrolytic solution of the present invention contains one or two or more species of ionic compounds, and an ionic compound comprises a compound composed of a cation and an anion. When the material contains two or more species of ionic compounds, two or more species of compounds composed of a cation and an anion may be contained, and cations or anions may be the same species. Herein, an ionic liquid means an ionic compound having a liquid state among ionic compounds comprising a compound composed of a cation and an anion.

The above-mentioned ionic compounds (including an ionic liquid) is preferably a liquid state having fluidity and a certain specified volume at 40°C. Specifically, it is preferably a liquid having a viscosity of 200 mPa·s or less at 40°C, more preferably 100 mPa·s or less, furthermore preferably 50 mPa· s or less.

First, the material for an electrolytic solution of the above-mentioned (A) form is described below.

The material for an electrolytic solution of the (A) form contains a solvent at an amount of 1 to 99% by mass in 100% by mass of the material for an electrolytic solution. When the amount is less than 1% by mass, ionic conductivity may be not sufficiently improved, and when the amount exceeds 99% by mass, stability may be not sufficiently improved due to volatilization of a solvent. The lower limit of the amount is preferably 1.5% by mass, more preferably 20% by mass, further preferably 50% by mass. The upper limit of the amount is preferably 85% by mass, more preferably 75% by mass, further preferably 65% by mass. A range is preferably a solvent amount of 50 to 85% by mass.

The material for an electrolytic solution of such a form has a reduced volatile matter and, moreover, is not frozen, for example, at a low temperature of -55°C, is excellent in ionic conductivity and, when the material constitutes an electrolytic solution, excellent fundamental performance can be exhibited.

As the above-mentioned solvent, any solvent may be used as far as it can improve ionic conductivity and, for example, water and an organic solvent are preferable. Examples of the organic solvent may include ether such as 1,2-dimethoxyethane, tetrahydrofuran, 2-methyltetrahydrofuran, crown ether, triethylene glycol methyl ether, tetraethylene glycol dimethyl ether, and dioxane; carbonate such as ethylene carbonate, propylene carbonate, diethyl carbonate, and methylethyl carbonate; chain carbonic acid esters such as dimethyl carbonate, ethylmethyl carbonate, diethyl carbonate, diphenyl carbonate, and methylphenyl carbonate; cyclic carbonic acid ester such as ethylene carbonate, propylene carbonate, ethylene 2,3-dimethylcarbonate,butylene carbonate,vinylene carbonate, and ethylene 2-vinylcarbonate; aliphatic carboxylic acid ester such as methyl formate, methyl acetate, propionic acid, methyl propionate, ethyl acetate, propyl acetate, butyl acetate, and amyl acetate; aromatic carboxylic acid esters such as methyl benzoate and ethyl benzoate; carboxylic acid ester such as γ-butyrolactone, γ-valerolactone, δ-valerolactone; phosphoric acid ester such as trimethyl phosphate, ethyldimethyl phosphate, diethylmethyl phosphate, and triethyl phosphate; nitrile such as acetonitrile, propionitrile, methoxypropionitrile, glutaronitrile, adiponitrile, and 2-methylglutaronitrile; amide such as N-methylformamide, N-ethylformamide, N,N-dimethylformamide, N,N-dimethylacetamide, N-methylpyrrolidinone, N-methylpyrrolidone, and N-vinylpyrrolidone; sulfur compound such as dimethylsulfone, ethylmethylsulfone, diethylsulfone, sulfolane, 3-methylsulfolane, and 2,4-dimethylsulfolane; alcohol such as ethylene glycol, propylene glycol, ethylene glycol monomethyl ether, and ethylene glycol monoethyl ether; ether such as ethylene glycol dimethyl ether, ethylene glycol diethyl ether, 1,4-dioxane, 1,3-dioxolane, tetrahydrofuran, 2-methyltetrahydrofuran, 2,6-dimethyltetrahydrofuran, and tetrahydropyran; sulfoxides such as dimethyl sulfoxide, methylethyl sulfoxide, and diethyl sulfoxide; aromatic nitrile such as benzonitrile, and tolunitrile; nitromethane, 1,3-dimethyl-2-imidazolidinone, 1,3-dimethyl-3,4,5,6-tetrahydro-2(1H)-pyrimidinone, and 3-methyl-2-oxazolidinone, and one or two or more species of them may be used.

Among these, carbonic acid ester, aliphatic esters, and ether are more preferable, carbonate are still more preferable, and cyclic ester such as γ-butyrolactone, and γ-valerolactone are most preferable.

The above-mentioned material for an electrolytic solution of the (A) form contains a cyano group-containing anion represented by the formula (1). Such an anion may be an anion constituting the above-mentioned ionic compound comprised in the material for an electrolytic solution of the present invention, or may be an anion constituting other components. By containing such an anion, the material for an electrolytic solution may be excellent in ionic conductivity, and suitable for materials constituting ionic conductors. In addition, the material for an electrolytic solution may contain other anions as far as they suitably act when constituting an electrolytic solution and, for example, contained may be the following anions;

a bistrifluoromethanesulfonylimide anion (TFSI), a tetrafluoroboric acid anion, monocarboxylic acid such as acetic acid and benzoic acid, a dicarboxylic acid anion such as phthalic acid, maleic acid and succinic acid anions, and a sulfate ester anion such as methyl sulfate and ethyl sulfate.

Alternatively, one or two or more species of the following ions may be used;
the fluorine-containing inorganic ions such as a fluorine-containing inorganic ion, a hexafluorophosphoric acid ion, a hexafluoroarsenic acid ion, a hexafluoroantimonic acid ion, a hexafluoroniobic acid ion, and a hexafluorotantalic acid ion; a carboxylic acid ion such as a hydrogen phthalate ion, a hydrogen maleate ion, a salicylic acid ion, a benzoic acid ion, and an adipic acid ion; a sulfonic acid ion such as a benzenesulfonic acid ion, a toluenesulfonic acid ion, a dodecylbenzenesulfonic acid ion, a trifluoromethanesulfonic acid ion, and a perfluorobutanesulfonic acid ion; an inorganic oxoacid ion such as a boric acid ion and phosphoric acid ion; a tetradentate boric acid ion such as a bis(trifluoromethanesulfonyl)imide ion, a bis(pentafluoroethanesulfonyl)imide ion, a tris(trifluoromethanesulfonyl)methide ion, a perfluoroalkylfluoroborate ion, a perfluoroalkylfluorophosphate ion, borodicatecholate, borodiglycholate, borosalicylate, borotetrakis(trifluoroacetate), and bis(oxalate)borate.

Referring to the above-mentioned anion represented by the formula (1), X represents at least one element selected from among B, C, N, 0, Al, Si, P, As, and Se, and C, N or S is preferable. C or N is more preferable. C is furthermore preferable, and the form, in which X in the above formula (1) is carbon element (C), is one of the preferable embodiments in the present invention. M¹ and M² may be the same or different and each independently represents an organic linking group selected from among -S-, -O-, -SO₂-, and -CO-, preferably -SO₂-, or -CO-. Q represents an organic group and is preferably a hydrogen atom, a halogen atom, CₚF_{(2p+1-q)}H_{q}, OCₚF_{(2p+1-q)}H_{q}, SO₂CₚF_{(2p+1-q)}H_{q}, CO₂CₚF_{(2p+1-q)}H_{q}, COCₚF_{(2p+1-q)}H_{q}, SO₃C₆F₅₋ᵣHᵣ, or NO₂ (wherein 1≤p≤6, o<q≤13, 0<r≤5), for instance, more preferably a fluorine atom, a chlorine atom, CₚF(_{2p+1-q)}H_{q}, or SO₂CₚF_{(2p+1-q)}H_{q}. The symbol a is an integer of not less than 1, and the symbols b, c, d, and e each is an integer of not less than 0, with a, d, and e being dependent on the valence number of the element X; for example wherein X=sulfur atom, a=1, d=0, e=0, and X=nitrogen atom, (1) a=2, d=0, e=0, (2) a=1, d=1, e=0, or (3) a=1, d=0, e=1, and b and c are preferably 0.

As the anion represented by the formula (1), a dicyanamide anion (DCA), a thiocyanate anion, a tricyanomethide anion (TCM), a tetracyanoboron anion, a cyanoxy anion (CYO) and the like are preferable since they do not contain fluorine and are excellent in corrosion resistance in an electrode and the like and, in particular, a tricyanomethide anion is preferable.

The above-mentioned cyano group-containing anion may be an anion represented by the formula (2); 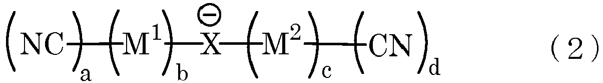 in the formula, X represents at least one element selected from among B, C, N, 0, Al, Si, P, S, As and Se; M¹ and M² are the same or different and each represents an organic linking group; a is an integer of not less than 1, and b, c and d each independently is an integer of not less than 0.

The form, in which the cyano group-containing anion is the anion represented by the formula (2), is one of the preferable embodiment in the present invention.

Referring to the above-mentioned anion represented by the formula (2), X, M¹ and M² are same as those mentioned above, and the symbol a is an integer of not less than 1, and the symbols b, c, and d each is an integer of not less than 0, with a and d being dependent on the valence number of the element X; for example wherein X=sulfur atom, a=1 and d=0, and X=Nitrogen atom, a=2 and d=0, or a=1, d=1.

As the anion represented by the formula (2), a dicyanamide anion (DCA),a tricyanomethide anion (TCM), and the like are preferable since they do not contain fluorine and are excellent in corrosion resistance in an electrode and the like and, in particular, a tricyanomethide anion is preferable.

As an amount of an anion present in the above-mentioned material for an electrolytic solution of the form (A), the lower limit of the content of the compound derived from the anion is preferably 1% by mass, more preferably 5% by mass, furthermore preferably 10% by mass relative to 100% by mass of the material for an electrolytic solution. The upper limit is preferably 99.5% by mass, more preferably 95% by mass, further more preferably 90% by mass.

The above-mentioned material for an electrolytic solution contains a cation constituting the ionic compound, and may contain other cations. As such a cation to be contained in the material for an electrolytic solution of the present invention, any cation may be used as far as it suitably acts when the material constitutes an electrolytic solution and, for example, it is preferable that the onium cation represented by the formula (3) is comprised.

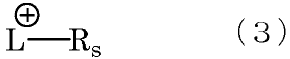

In the formula, L represents C, Si, N, P, S or 0; R groups are the same or different and each represents an organic group and may be bonded together; s is an integer of 3, 4 or 5 and is a value determined by the valency of the element. In addition, it is preferable that such a cation is a cation forming the ionic compound contained in the material for an electrolytic solution of the present invention.

The above-mentioned onium cation represented by the formula (3) is preferably that represented by the following formula (3-1); 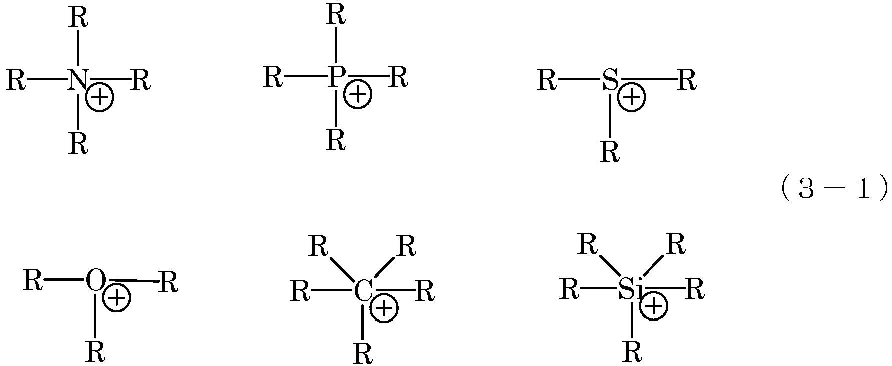 , in the formula, R is the same as in the formula (3). Among these, the onium cations of the following (I) to (IV) are preferable. Additionally, in the formula representing cations of the following (I) to (III), R¹ to R¹² are the same or different and each is an organic group and two of themmay be bonded together.
(I) Ten species of heterocyclic onium cations represented by the following formula: 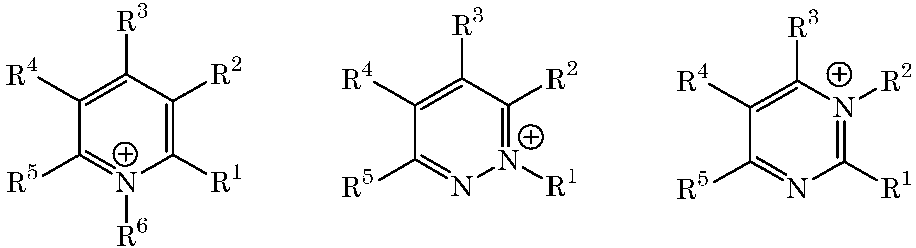 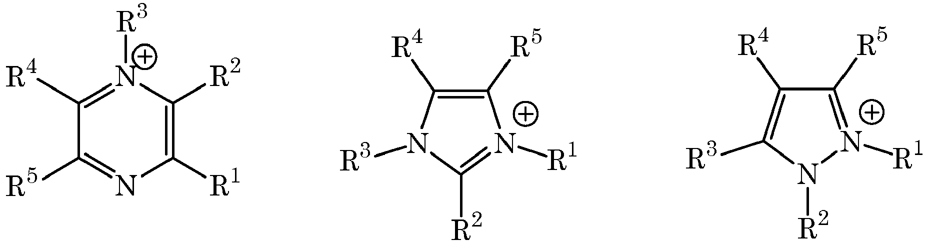 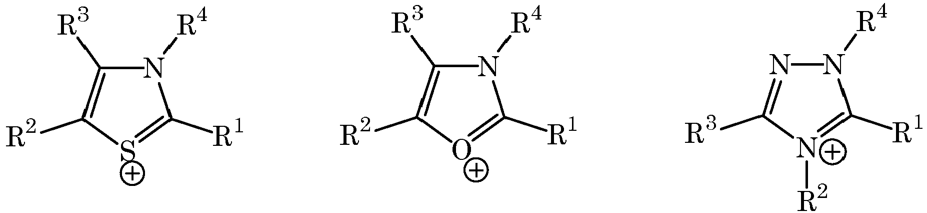 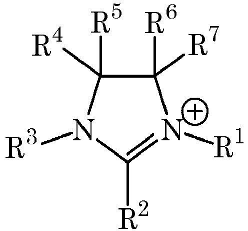
(II)Fivespeciesofunsaturatedonium cationsrepresented by the formula; 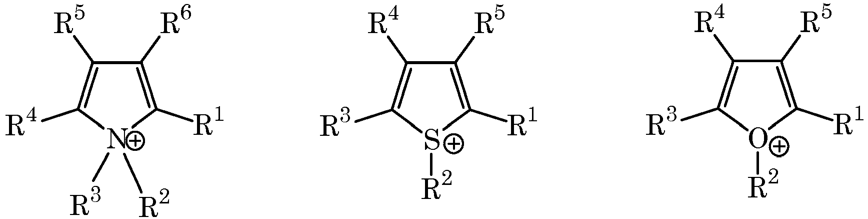 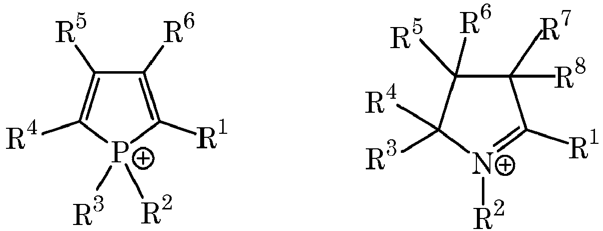
(III) Nine species of saturated ring onium cations represented by the formula; 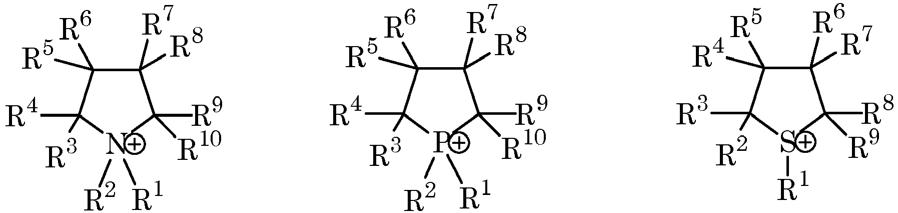 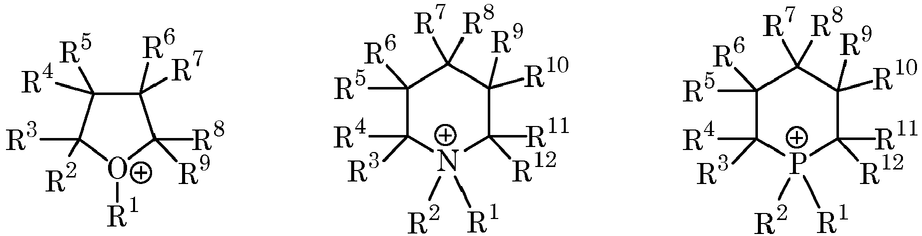 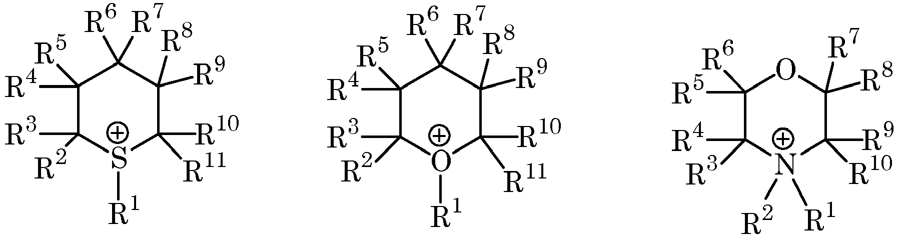
(IV) Linear onium cations in which R is a C₁-C₈ alkyl group. More preferred among such onium cations are those in which L in the above-mentioned formula (3) is a nitrogen atom. Still more preferred are six onium cations represented by the following formula (3-2), and chain onium cation such as triethylmethylammonium, dimethylethylpropylammonium, diethylmethylmethoxyethylammonium, trimethylpropylammonium, trimethylbutylammonium, and trimethylhexylammonium. Formula (3-2);

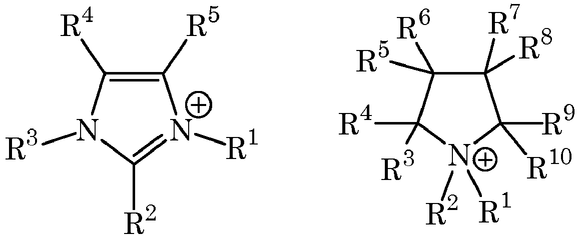

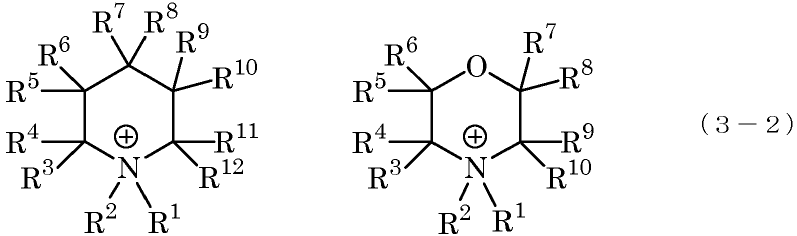

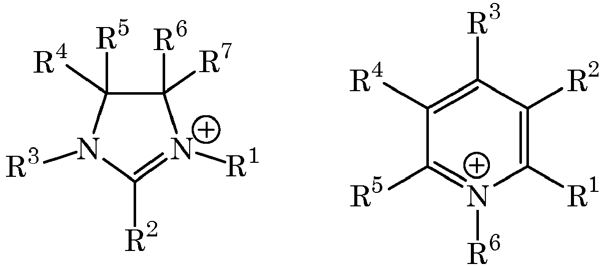

In the formula, R¹ to R¹² are the same as in the formula representing the above-mentioned (I) to (III).

The organic group represented by each of R¹ to R¹² mentioned above is preferably a hydrogen atom, a fluorine atom, an amino, imino, amide, ether, ester, hydroxyl, carboxyl, carbamoyl, cyano, sulfone or sulfide group or a straight, branched or cyclic C₁-C₁₈ hydrocarbon group or fluorocarbon group, which may comprising a nitrogen, oxygen, sulfur or like atom or atoms. More preferred are a hydrogen atom, a fluorine atom, a cyano group, a sulfone group, C₁-C₈ hydrocarbon group, and fluorocarbon group.

The compound comprising such onium cation and the above-mentioned anion can occur as an ordinary temperature molten salt capable of stably retaining its molten state at ordinary temperature. Therefore, the material for an electrolytic solution of the present invention, which comprises the compound can serve as an adequate material of ionic conductors in electrochemical devices and can endure a prolonged period of use. Additionally, the term "molten salt" as used herein means a salt capable of retaining its liquid state stably within the temperature range of from room temperature to 80°C.

With respect to the amount of the cation present in the material for an electrolytic solution of the above-mentioned (A) form, the lower limit is 0.5 moles, and more preferably 0.8 moles, relative to the anion 1 mole in the material for an electrolytic solution. And the upper limit is 2.0 moles, and more preferably 1.2 moles.

In the material for an electrolytic solution of the above-mentioned (A) form, the ionic conductivity is preferably 1 × 10⁻⁷S/cm or more at -55°C. When the ionic conductivity is less than 1 × 10⁻⁷S/cm, there arises the possibility of the electrolytic solution prepared by using the material for an electrolytic solution according to the present invention failing to stably function while retaining a sufficient level of ionic conductivity with the lapse of time. The ionic conductivity is more preferably 1 × 10⁻⁶S/cm or more, and furthermore preferably 5 × 10⁻⁵S/cm or more, and still more preferably 1 × 10⁻⁴S/cm or more.

The above-mentioned ionic conductivity can judiciously be measured by the complex impedance method using an impedance analyzer called HP4294A (trademark, product of Toyo Corp.), and an impedance analyzer called SI1260 (trademark, product of Solartron Co., Ltd.) in which SUS electrodes are used.

The above-mentioned material for an electrolytic solution preferably has a viscosity of 300 mPa·s or less at 25°C. When the viscosity is more than 300 mPa·s, the ionic conductivity may be improved sufficiently. The viscosity is more preferably 200 mPa·s or less, and furthermore preferably 100 mPa·s or less, and most preferably 50 mPa·s or less.

The method of measurement of the above-mentioned viscosity is not particularly restricted but the method which comprises using a model TV-20 cone/plate type viscometer (product of Tokimec Inc.) and performing the measurement at 25°C can judiciously be used.

The above-mentioned material for an electrolytic solution preferably has 50% or less of a peak reduction ratio after heating at 150°C for 50 hours. By adopting such a form, properties such as high electric conductivity, thermal stability and withstand voltage propertyinitially possessed by an electrolytic solution may be maintained for a long period, and it becomes possible to sufficiently improve stability for a long period of an electrolytic solution. The peak reduction ratio is more preferably 30% or less, furthermore preferably 20% or less.

Herein, a peak means a peak area, and a peak reduction ratio after heating at 150°C for 50 hours is a value obtained from (A-B)/A × 100, wherein A represents a peak of the ionic compound in the material for an electrolytic solution before heating and B represents a peak after heating at 150°C for 50 hours. The peak (mean peak area) can be measured by liquid chromatography (LC) analysis.

In the present invention, the ionic compound itself contained in a material for an electrolytic solution may satisfy such a numerical value range. That is, an ionic compound having a peak reduction ratio after heating at 150°C for 50 hours of 50% or less is also one aspect of the present invention.

Then, the above-mentioned material for an electrolytic solution of the (B) form is described below. First, the above-mentioned (B-4) form is described.

In the above-mentioned material for an electrolytic solution of the (B-4) form, when the ionic conductivity is less than 1 × 10⁻⁶S/cm, there arises the possibility of the electrolytic solution prepared by using the material for an electrolytic solution according to the present invention failing to stably function while retaining a sufficient level of ionic conductivity with the lapse of time. The ionic conductivity is preferably 1 × 10⁻⁵/cm or more, and more preferably 5 × 10⁻⁵S/cm or more, and still more preferably 1 × 10⁻⁴S/cm or more.

The above-mentioned ionic conductivity can judiciously be measured by the method used in the above-mentioned form (A) .

In the above-mentioned (B-4) form, it is preferable that the onium cation represented by the formula (2) is comprised, and it is preferable that such a cation is a cation forming the ionic liquid contained in the material for an electrolytic solution of the present invention. A preferable form of the onium cation represented by the formula (2) is as described in the (A) form.

Then, the above-mentioned (B-1) form is described.

In the (B-1) form, the ammonium cation containing no unsaturated bond and the ammonium cation having an unsaturated bond contained in a material for an electrolytic solution each may be a cation in two or more species of ionic liquids, or may be derived from other compounds.

The above-mentioned ammonium cation having no unsaturated bond may be an alkylammonium cation comprising a single bond between elements. The single bond includes a single bond between same elements, and a single bond between different elements.

As the ammonium cation having no unsaturated bond, among nine species of saturated cyclic onium cations of the above-mentioned (III), chain onium cations of the above-mentioned (IV) in which R is a C₁ to C₈ alkyl group, and the like in the above-mentioned (B-4) form, cations in which L in the formula (3) is a nitrogen atom are preferable.

The above-mentioned ammonium cation containing the unsaturated bond may be an alkylammonium cation having an unsaturated bond. The unsaturated bond includes a multiple bond between same elements such as a carbon-carbon multiple bond, and a nitrogen-nitrogen multiple bond, and a multiple bond between different elements such as a carbon-nitrogen multiple bond. It is preferable that such a unsaturated bond is a conjugated double bond. The conjugated double bond indicates a double bond in the case where two or more double bonds are respectively connected via a single bond.

As the ammonium cation having the unsaturated bond, among ten heterocyclic onium cations of the above-mentioned (I), five unsaturated onium cations represented of the above-mentioned (II), and the like in the above-mentioned (B-4) form, cations in which L in the formula (3) is a nitrogen atom are preferable.

Then, the above-mentioned (B-2) form is described.

The (B-2) form is, in two species of ammonium cations having no unsaturated bond, (a) a form in which one has a cyclic structure and the other has no cyclic structure, or (b) a form in which both have a cyclic structure. And such an ammonium cation having no unsaturated bond may be a cation in two or more species of the ionic liquids contained in the material for an electrolytic solution, or may be derived from other compounds.

As the cation having a cyclic structure in the above-mentioned (a) and (b) forms, for example, among the ammonium cations having no unsaturated bond in the above-mentioned (B-1) form, cations having a cyclic structure are preferable. As such an ammonium cation having no unsaturated bond and a ring structure, for example, nine saturated cyclic onium cations represented of the above-mentioned (III) in the above-mentioned (B-4) form, and the like are preferable.

In addition, as the cation having no cyclic structure in the above-mentioned (a) form, among ammonium cations having no unsaturated bond in the above-mentioned (B-1) form, cations having no cyclic structure are preferable. As such an ammonium cation, for example, chain onium cations of the above-mentioned (IV) in which R is a C₁ to C₈ alkyl group in the above-mentioned (B-4) form, and the like are preferable.

Then, the above-mentioned (B-3) form is described.

In the (B-3) form, at least two species of ammonium cations having an unsaturated bond and anions to be paired with the cations comprised in the material for an electrolytic solution may be cations and anions in two or more species of the ionic liquids contained in the material for an electrolytic solution, or may be derived from other compounds.

As the above-mentioned ammonium cation having the unsaturated bond, the ammonium cation having an unsaturated bond in the above-mentioned (B-1) form is preferable. At least two species of ammonium cations having an unsaturated bond may be derived from compounds composed of a cation and an anion, and at least two or more species of anions to be paired with the cations are contained in the material for an electrolytic solution.

The anions to be paired with the cations may be different species. Different species means, for example, that even when species of elements constituting anions are the same or structures of anions are similar, the ratio of the composition is different, or that even when anions has similar structures, species of elements constituting anions are different.

Then, the above-mentioned (B-5) form is described.

In the (B-5) form, when a peak current reduction ratio at 3 cycle or later at voltage application in cyclic voltammetry measurement is less than 20%, withstand voltage property cannot be more sufficiently exhibited, and there is a possibility that an electrochemically further stable electrolytic solution cannot be obtained. The ratio is preferably 20% or more, more preferably 40% or more, furthermore preferably 60% or more. That is, in the material for an electrolytic solution of the (B-5) form, a peak current reduction ratio at 3 cycle or later at voltage application in cyclic voltammetry measurement is preferably 20% or more, more preferably 60% or more.

In addition, in the (B-5) form, a peak current reduction ratio at 2 cycle or later at voltage application in cyclic voltammetry measurement is preferably 10% or more, more preferably 20% or more.

Herein, the peak current reduction ratio at 2 cycle or later at voltage application is a value obtained by (iₚ₁ - iₚₙ) /iₚ₁ × 100, wherein "iₚ₁" represents a peak current at first cycle and "iₚₙ" represents a peak current at a second cycle or later.

The cyclic voltammetry (CV) measurement is preferably performed by employing a standard voltammetry tool HSV-100 (trade name; manufactured by Hokuto Denko Corp.) using a three electrodes-cell under 30°C atmosphere. Measurement conditions in this case are as follows:

### (Measurement conditions)

Working electrode: glassy carbon electrode
Reference electrode: Ag electrode
Counter electrode: platinum electrode
Scanning rate: 100 mV/s
Scanning range: natural potential to 3 V

The above-mentioned material for an electrolytic solution in the form (B-5) preferably has a viscosity of 200 mPa·s or less at 40°C. When the viscosity is more than 200 mPa·s, the ionic conductivity may be improved sufficiently. The viscosity is more preferably 100 mPa·s or less and furthermore preferably 50 mPa·s or less.

The method of measurement of the above-mentioned viscosity is preferable, for example, the method which comprises using a model TV-20 cone/plate type viscometer (product of Tokimec Inc.) and performing the measurement at 25°C can judiciously be used.

In addition, the material for an electrolytic solution in the (B-5) form preferably contains the onium cation represented by the formula (3) and/or the anion represented by the formula (1), thereby, it becomes possible to obtain an electrolytic solution having both better ionic conductivity and withstand voltage property. More preferably, the material comprises both the onium cation represented by the formula (3) and the anion represented by the formula (1). Such an onium cation and/or anion are preferably a cation and/or an anion forming the ionic liquid contained in the material for an electrolytic solution of the present invention.

Furthermore, the material for an electrolytic solution in the (B-5) form preferably contains two or more species of ionic liquids. Thereby, an electrolytic solution in which decomposition of an electrolyte salt composed of the ionic liquid is sufficiently suppressed at a high voltage and which is electrochemically further stable is obtained.

In the anion represented by the formula (1) contained in the (B-1) and (B-3) forms, X, M¹, M², Q, a, b, c, d and e are as described above in the (A) form, and preferable embodiments of the anion represented by the formula (1) are also as described above.

And in addition to the anion represented by the formula (1), the above-mentioned other anions may be contained.

As the anion contained in the (B-2) and (B-4) forms, any anion may be used as far as it suitably acts when the material constitutes an electrolytic solution and, for example, the anion represented by the formula (1), a bistrifluoromethanesulfonylimide anion (TFSI), a tetrafluoroboric acid anion and the like are preferable.

With respect to the amount of the cation present in the material for an electrolytic solution according to above-mentioned (B) form, the lower limit of the content of the compound derived from cation is preferably 1% by mass, and more preferably 5% by mass, and furthermore preferably 10% by mass, relative to the material for an electrolytic solution 100% by mass. And the upper limit is 99.5% by mass, and more preferably 95% by mass, and furthermore preferably 90% by mass.

And with the amount of the anion present, the lower limit is preferably 0.5 moles, and more preferably 0. 8 moles relative to the cation 1 mole in the material for electrolytic solution. And the upper limit is preferably 2.0 moles, and more preferably 1.2 moles.

It is preferable that the material for an electrolytic solution of the above-mentioned (B) form further contains an organic solvent. Thereby, ionic conductivity is further improved.

As the organic solvent, one or two or more species of solvents as described above in the above-mentioned (A) form may be used, and preferable forms of the organic solvent are also as described above.

When a non-aqueous solvent is used as a solvent, it is preferable to control a moisture content, thereby, withstand voltage property and life property of electrochemical devices using such the electrolytic solution are stabilized. In addition, the material for an electrolytic solution of the (B) form also satisfies the requirement of high heat resistance and, by controlling moisture content, influence by a moisture is more sufficiently suppressed, and these properties are more sufficiently exhibited. Specifically, when a non-aqueous solvent is used, a moisture concentration in the electrolytic solution is preferably 1% by mass or less. The moisture concentration is more preferably 0.1% by mass or less. In addition, the moisture concentration is preferably 0.01% by mass or more, thereby, formation property upon repair of an oxidized film on anode can be sufficient.

In the material for an electrolytic solution of the (B) form, the amount of the organic solvent and water present is preferably such that the lower limit is 1% by mass and the upper limit is 20% by mass relative to 100% by mass of an electrolytic solution, from a viewpoint of improvement in conductivity and reduction in stability of an electrolytic solution due to volatilization of a solvent. When the amount is less than 1% by mass, there is a possibility that ionic conductivity becomes small. When the amount is more than 20% by mass, there is a possibility that stability is not sufficient due to volatilization of a solvent. The more preferable upper limit is 10% by mass, and the furthermore preferable upper limit is 5% by mass. Moreover, the more preferable range is 1 to 10% by mass, and the furthermore preferable range is 1 to 5% by mass.

Then, the above-mentioned material for an electrolytic solution of the (A) and (B) forms is described.

The material for an electrolytic solution of the (A) and (B) forms preferably contains a nitrogen heterocyclic cation having a conjugated double bond. Such a form is also one of preferable forms of the present invention.

The nitrogen heterocyclic cation having a conjugated double bond may be or may not be an ammonium cation having an unsaturated bond contained in the (B-1) and (B-3) forms. In addition, the (B-2) form becomes a form further containing such the nitrogen heterocyclic cation having a conjugated double bond.

The nitrogen heterocyclic cation having a conjugated double bond, among ten species of heterocyclic onium cations of the above-mentioned (I), and five species of unsaturated onium cations of the above-mentioned (II), is preferably the cations having a conjugated double bond, in which L is a nitrogen atom in the formula (3).

Preferably, the material for an electrolytic solution according to the above-mentioned forms (A) and (B) further comprises an alkali metal salt and/or an alkaline earth metal salt. The material for an electrolytic solution according to the present invention which comprises such alkali metal salt and/or alkaline earth metal salt and thus comprises an electrolyte can serve as an adequate material for electrolytic solution in electrochemical devices. Suited as the alkali metal salt are lithium salt, sodium salt and potassium salt. Suitable as the alkaline earth metal salt are calcium salt and magnesium salt. The lithium salt is more preferred.

The above-mentioned alkali metal salt and/or an alkaline earth metal salt may be compound having the above-mentioned anion or may be other compounds.

In the case of the compound having the above-mentioned anion, alkali metal salt and/or alkaline earth metal salt of the anion represented by the formula (1) is preferable, and lithium salt is more preferable. As examples of such lithium salt is preferably, other than the lithium salt of above-mentioned anion, LiC(CN)₃, LiSi(CN)₃, LiB(CN)₄, LiAl (CN)₄, LiP(CN)₂, LiP(CN)₆, LiAs(CN)₆, LiOCN, LiSCN or the like.

In the case of the other compounds, an electrolyte salt showing a high dissociation constant in an electrolytic solution is preferable. Thus, suited for use are alkali metal salt and alkaline earth metal salt of trifluoromethanesulfonic acid, such as LiCF₃SO₃, NaCF₃SO₃ and KCF₃SO₃; alkali metal salt and alkaline earth metal salt of perfluoroalkanesulfonimide, such as LiC(CF₃SO₃)₃ and LiN(CF₃CF₃SO₂)₂; alkali metal salt and alkaline earth metal salt of hexafluorophosphoric acid, such as LiPF₆, NaPF₆ and KPF₆; alkali metal salt and alkaline earth metal salt of perchloric acid, such as LiClO₄ and NaClO₄; tetrafluoroborate salt such as LiBF₄ and NaBF₄; such alkali metal salt as LiAsF₆, LiI, NaI, NaAsF₆ and KI. Among these, LiPF₆, LiBF₄, LiAsF₆, and alkali metal salt and alkaline earth metal salt of perfluoroalkanesulfonimide are preferred from the solubility and ionic conductivity viewpoint.

The above-mentioned material for an electrolytic solution may further contain other electrolyte salt. Preferred as such are perchloric acid quaternary ammonium salt such as tetraethylammonium perchlorate; tetrafluoroboric acid quaternary ammonium salt such as (C₂H₅)₄NBF₄; such quaternary ammonium salt as (C₂H₅)₄NP_{F}6; quaternary phosphonium salt such as (CH₃)₄P· BF₄ and (C₂H₅)₄P·BF₄. Preferred from the solubility and ionic conductivity viewpoint is quaternary ammonium salt.

The amount of such electrolyte salt present in the above-mentioned material for an electrolytic solution is preferably such that the lower limit of the electrolyte salt is 0.1% by mass, and the upper limit is 50% by mass, relative to 100% by mass of the material for an electrolytic solution. When it is less than 0.1% by mass, the absolute ion amount may be insufficient, possibly leading to a low ionic conductivity. When it is more than 50% by mass, the migration of ions may be inhibited to a great extent. The upper limit is more preferably 30% by mass.

When the above-mentioned material for an electrolytic solution contains a proton, it can suitably serve as a material of a hydrogen cell-constituting ionic conductor. Such material for an electrolytic solution that further comprises a proton constitutes one of the preferred modes of embodiment of the present invention. In the present invention, the proton can occur in the electrolytic solution when the material for the electrolytic solution contains a compound capable of proton generation upon dissociation.

With respect to the amount of the proton present in the above-mentioned material for an electrolytic solution, the lower limit is 0.01 mole/L, and the upper limit is 10 moles/L, relative to the material for an electrolytic solution. When it is less than 0.01 mole/L, the absolute proton amount may be insufficient, possibly leading to a low protonic conductivity. When it exceeds 10 moles/L, the migration of ions may be inhibited to a great extent. The upper limit is more preferably 5 moles/L.

The above-mentioned material for an electrolytic solution in the above-mentioned forms (A) and (B) comprises one or more constituents other than those mentioned hereinabove unless the effects of the present invention are sacrificed. For example, it may comprise one or more of various inorganic oxides in minute particle form.

Suitable as the above-mentioned inorganic oxide in minute particle form are those which show no electronic conductivity and are electrochemically stable. Those which show ionic conductivity are more preferred. Suitable as such minute particle-form oxides are α, β and γ-alumina, silica, titania, zirconia, magnesia, barium titanate, titanium oxide, hydrotalcite, and like ionically conductive or nonconductive ceramics in minute particle form.

The above-mentioned inorganic oxide in minute particle formpreferably has a specific surface area as large as possible, preferably 5 m²/g or more, more preferably 50 m²/g or more, as determined by the BET method. Such inorganic oxide in minute particle form may have any crystal particle diameter provided that it can be mixed up with the other constituent elements of the electrolytic solution. A preferred size (mean crystal particle diameter) is 0.01 µm or more but 20 µm or less, more preferably 0.01 µm or more but 2 µm or less.

The above-mentioned inorganic oxide in minute particle may be variegated in shape or form, for example spherical, oval, cubic, cuboid, cylindrical, or rod-like.

The amount of addition of the above-mentioned inorganic oxide in minute particle form is preferably 100% by mass or less, relative to the material for an electrolytic solution. When it exceeds 100% by mass, the inorganic oxide may adversely lower the ionic conductivity. More preferable is 0.1% by mass or more, but 20% by mass or less.

In addition, besides, acid anhydrides such as acetic anhydride, phthalic anhydride, maleic anhydride, succinic anhydride, and pyromellitic anhydride, and acid compounds thereof, and basic compounds such as triethylamine, and methylimidazole may be added. The addition amount is preferably 50% by mass or less, more preferably 0.01% by mass or more and 20% by mass or less relative to the material for an electrolytic solution.

The above-mentioned material for an electrolytic solution may contain various additives in addition to the above-mentioned salt and solvent. The purpose of adding additives is versatile, and examples thereof include improvement in electric conductivity, improvement in heat stability, suppression of electrode deterioration due to hydration or dissolution, suppression of gas generation, improvement in withstand voltage, and improvement in wettability. As such additives, one or two or more species of the following compounds may be used;
nitro compound such as p-nitrophenol, m-nitroacetophenone, and p-nitrobenzoic acid; phosphorus compound such as dibutylphosphate, monobutylphosphate, dioctyl phosphate, monooctyl octylphosphonate, and phosphoric acid; boron compound such as boric acid, and a complex compound of boric acid and polyhydric alcohol (ethylene glycol, glycerin, mannitol, polyvinyl alcohol or the like) or polysaccharide; nitroso compound; urea compound; arsenic compound; titanium compound; silicic compound; aluminic acid compound; nitric acid and nitrous acid compound; benzoic acid such as 2-hydroxy-N-methylbenzoicacidanddi(tri)hydroxybenzoicacid; acid such as gluconic acid, bichromic acid, sorbic acid, dicarboxylic acid, EDTA, fluorocarboxylic acid, picric acid, suberic acid, adipic acid, sebacic acid, heteropolyacid (tungstic acid, molybdic acid), gentisic acid, borodigentisic acid, salicylic acid, N-aminosalicylic acid, borodiprotocatechuic acid, borodipyrocatechol, bamonic acid, bonic acid, borodiresorcinic acid, resorcinic acid, borodiprotocachueric acid, glutamic acid and dithiocabamic acid; ester thereof, amide thereof and salt thereof; silane coupling agent; silicon compound such as silica, and aliminosilicate; amine compound such as triethylamine, and hexamethylenetetramine; L-amino acid; benzol; polyhydric phenol; 8-oxyqiunoline; hydroquinone; N-methylpyrocatechol; quinoline; sulfur compound such as thioanisole, thiocresol, and thiobenzoic acid; sorbitol; L-hystidine.

The content of the additives is not particularly limited, but for example, is preferably in a range of 0.1 to 20% by mass, more preferably in a range of 0.5 to 10% by mass relative to 100% by mass of the material for an electrolytic solution.

Then, the ionic material-containing composition of the present invention is described below.

The ionic material-containing composition of the present invention contains an ionic material, the ionic material comprises a compound composed of a cation and an anion, and one or two or more species of the ionic materials may be used.

Preferable forms of such an ionic material are the same as preferable forms in the above-mentioned ionic compound.

The content of the ionic material may be appropriately set so that the ionic material-containing composition satisfies various properties described later, being not limited, but for example, is preferably 5% by mass or more, more preferably 20% by mass or more, still more preferably 50% by mass or more relative to 100% by mass of the ionic material-containing composition.

In the above-mentioned ionic material-containing composition, the ionic material is (C-1) a form in which the anion represented by the formula (1) is contained, and an impurity content is 0.1% by mass or less, and a moisture content is 0.05 to 10% by mass, or (C-2) a form in which a tricyanomethide anion is contained, and an impurity content is 0.1% by mass or less. Alternatively, the ionic material may be a form satisfying the (C-1) and (C-2), that is, a form in which a tricyanomethide anion is contained, an impurity content is 0.1% by mass or less, and a moisture content is 0.05 to 10% by mass, and such a form is one of preferable forms of the present invention.

The ionic material may be (C-3) a form in which at 40°C the ionic material is a liquid state of 200 mPa·s or less, and an impurity content is 0.1% by mass or less, and a moisture content is 0.05 to 10% by mass, and also in this case, it is preferable that the anion represented by the formula (1) is contained.

In the above-mentioned ionic material of the forms (C-1) to (C-3), an impurity content is preferably 0.1% by mass (1000 ppm) or less in 100% by mass of the ionic material. When the content exceeds 0.1% by mass, there is a possibility that sufficient electrochemical stability may not be obtained. The content is preferably 0.05% by mass or less, more preferably 0.01% by mass or less.

The impurities do not contain water, and examples thereof include impurities which are mixed in upon preparation of the ionic material. Specifically, in the case where an ionic material comprising the anion represented by the formula (1) described later is prepared, for example, when the ionic material is derived and obtained using a halogen compound, there is a possibility that a halogen compound is mixed in as impurity, or when the ionic material is derived and obtained using a silver salt, there is a possibility that a silver salt is mixed in as an impurity. In addition, there is a possibility that a preparation raw material, a byproduct and the like are mixed in as impurities.

In the present invention, by setting an impurity content in the ionic material as described above, for example, it becomes possible to sufficiently suppress deterioration of performance due to poisoning of an electrode in an electrochemical device by a halogen compound, or sufficiently suppress deterioration of performance due to influence of a silver ion or the like on ionic conductivity. For example, the measurement of an impurity content can be performed by the following measuring method.

### (Method of measuring impurity content)

(1) ICP (measurement of cations such as silver ion and iron ion) Instrument: ICP light emitting spectrophotometric apparatus called SPS4000 (manufactured by Seiko Instruments Inc.) Method: 0.3 g of a sample is diluted by 10-fold with ion-exchanged water, and the resulting solution is measured.
(2) Ion chromatography (measurement of anions such as nitric acid ion, bromine ion, and chlorine ion)
Instrument: ion chromatography system called DX-500
(manufactured by Nippon Dionex Co., Ltd.)
Separation mode: ion exchange
Detector: electric conductivity detector called CD-20 Column: AS4A-SC
Method: 0.3g of a sample is diluted by 100-fold with ion-exchanged water, and the resulting solution is measured.

In the above-mentioned ionic material, a moisture content is preferably 0.05 to 10% by mass in 100% by mass of the ionic material. When the content is less than 0.05% by mass, moisture is difficult to manage, leading to higher cost. On the other hand, when the content exceeds 10% by mass, there is a possibility that electric stability cannot be sufficiently exhibited. The lower limit is preferably 0.1% by mass, and more preferably 0.5% by mass. The upper limit is preferably 5% by mass, and more preferably 3% by mass.

Measurement of the moisture content is preferably performed by the following measurement methods.

### (Method of measuring moisture content)

In sample preparation, 0.25 g of a measurement sample and 0.75 g of dehydrated acetonitrile are mixed in a glove box having a dew point of -80°C or less, and 0.5 g of a mixed solution is collected with a sufficiently dried Terumo syringe 2.5 ml in the glove box. Thereafter, moisture measurement is performed with a Karl Fischer moisture meter called AQ-7 (trade name, manufactured by Hiranuma Sangyo Co., Ltd.).

The ionic material of the above-mentioned (C-1) form contains the anion represented by the formula (1) and, by containing such an anion, a material which is excellent in ionic conductivity and, at the same time, has sufficiently suppressed corrosivity on an electrode and the like, and is stable with the lapse of time may be obtained.

Referring to the above-mentioned formula (1), X represents preferably C, N, O or S, and more preferably C or N, and furthermore preferably C to be mentioned later herein. Q represents preferably a hydrogen atom; a halogen atom; an alkyl group, an allyl group, an acyl group, and substituted derivative thereof; CₚF_{(2p+1-q)}H_{q}, OCₚF_{(2p+1-q)}H_{q}, SO₂CₚF_{(2p+1-q)}H_{q}, CO₂CₚF_{(2p+1-q)}H_{q}, COCₚF_{(2p+1-q)}H_{q}, SO₃C₆F₅₋ᵣHᵣ, NO₂ or the like (in each formula, 1≤p≤6, 0<q≤13, 0<r≤5). More preferred are a fluorine atom, a chlorine atom, CₚF_{(2p+1-q)}H_{q} and SO₂CₚF_{(2p+1-q)}H_{q}. M¹, M², a, b, c, d, and e are the same as those mentioned hereinabove referring to the above-mentioned form (A).

In the anion represented by the above formula (1), X in the formula (1) is preferably N or C, and more preferably carbon element (C). That is, the anion represented by the above formula (1) is preferably the anion represented by the following formula (1'), which is the formula (1) in which X is C; 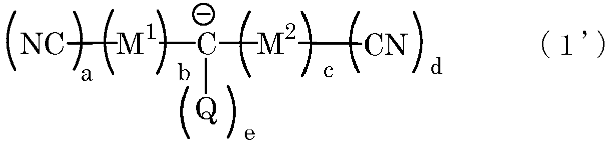 , in the formula, M¹, M², Q, a, b, c, d, and e are as described above.

Preferred as the anion represented by the above-mentioned formula (1) is an anion represented by the formula (2) in which e is 0 in the formula (1). More preferred is a tricyanomethide anion (TCM), dicyanamide anion (DCA), thioisocyanate anion, cyanooxy anion (CYO), and a tricyanomethide anion is particularly preferable. Further, the anions represented by the following formulas (4) or (5) and the like are also preferred.

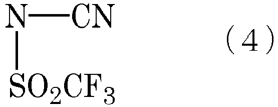

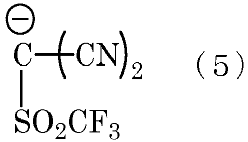

With respect to the amount of the above-mentioned anion present in the above-mentioned ionic material-containing composition, the lower limit of the content of the compound derived from the anion is preferably 1% by mass, and more preferably 5% by mass, and furthermore preferably 10% by mass, relative to the ionic material-containing composition 100% by mass. And the upper limit is 99.5% by mass, and more preferably 95% by mass, and furthermore preferably 90% by mass.

As the ionic material comprising the above-mentioned anion, preferred are a compound formed of the anion and a proton; an organic salt of the anion; an inorganic salt of the anion. Among these, an inorganic salt of the anion is preferable, and an organic salt of the anion preferably comprises an onium cation. The onium cation means an organic group having a non-metal atom such as 0, N, S and P or a semi-metal atom.

More preferably, the ionic material comprises the cation represented by the above-mentioned formula (3), and a form in which the ionic material comprises the cation represented by the formula (3) is also one of preferable forms of the present invention. One or two or more species of the above-mentioned cation may be used, and preferable forms of the onium cation represented by the formula (3) are as described above in the above-mentioned (A) form.

An ionic material-containing composition containing the onium cation and the anion becomes particularly preferable as materials of ionic conductors capable of enduring for a prolonged period in electrochemical devices. In addition, an ionic material-containing composition in such a form becomes a ordinary temperature molten salt capable of stably retaining its molten state at ordinary temperature, and a form in which the ionic material-containing composition contains a ordinary temperature molten salt of the anion represented by the formula (1) is also one of preferable forms of the present invention. That is, the ionic material-containing composition of the present invention is preferable as materials of ionic conductors using a novel molten salt. And the molten salt is as described above.

The ionic material-containing composition of the present invention may contain an organic compound having an onium cation except for an organic salt of an anion comprising the above-mentioned onium cation. As the organic compound having such an onium cation, for example, preferred are organic compounds anions of a halogen anion (fluoro anion, chloro anion, bromo anion, iodo anion), a borate tetrafluoride anion, a phosphate hexafluoride anion, an arsenate hexafluoride anion, a sulfonylimide anion represented by the following formula (6), a sulfonylmethide anion represented by the following formula (7), and an organic carboxylic acid (anion of acetic acid, trifluoroacetic acid, phthalic acid, maleic acid, benzoic acid and the like) as well as a fluorine-containing inorganic ion such as a hexafluorophosphoric acid ion, a hexafluoroarsenic acid ion, a hexafluoroantimonic acid ion, a hexafluoroniobic acid ion, and a hexafluorotantalic acid ion; a carboxylic acid ion such as a hydrogen phthalate ion, a hydrogen maleate ion, a salicylic acid ion, a benzoic acid ion, and an adipic acid ion; a sulfonic acid ion such as a benzenesulfonic acid ion; a toluenesulfonic acid ion, a dodecylbenzenesulfonic acid ion, a trifluoromethanesulfonic acid ion, and a perfluorobutanesulfonic acid; an inorganic oxoacid ion such as a boric acid ion, and a phosphoric acid ion; a tetradentate boric acid ion such as a bis(trifluoromethanesulfonyl)imide ion, a bis(pentafluoroethanesulfonyl)imide ion, a tris(trifluoromethanesulfonyl)methide ion, a perfluoroalkylfluoroborate ion, a perfluoroalkylfluorophosphate ion, borodicatecholate, borodiglycholate, borodisalycylate, borotetrakis(trifluoroacetate), bis(oxalato)borate, and the like.

^{⊖}N(SO₂R¹³)(SO₂R¹⁴) (6)

^{⊖}C(SO₂R¹³)(SO₂R¹⁴)(SO₂R¹⁵) (7)

In the formula, R¹³, R¹⁴, and R¹⁵ may be the same or different and each represents a C₁₋₄ perfluoroalkyl group which may optionally have one or two ether groups.

With respect to the amount of the onium cation present in the above-mentioned ionic material-containing composition, the lower limit is preferably 0.5 mole, and more preferably 0.8 mole, relative to the above-mentioned anion 1 mole. And the upper limit is preferably 2.0 mole, and more preferably 1.2 mole.

Preferably, the above-mentioned ionic material-containing composition comprises an alkali metal salt and/or an alkaline earth metal salt. The ionic material-containing composition, which comprises such alkali metal salt and/or alkaline earth metal salt and thus comprises an electrolyte, can serve as an ionic conductor for electrolytic solutions in electrochemical devices. Suited as the alkali metal salt are as mentioned in the above-mentioned materials for electrolytic solutions.

The above-mentioned alkali metal salt and/or an alkaline earth metal salt may be compound having the above-mentioned anion or may be other compounds.

In the case of the ionic material-containing composition having the above-mentioned anion, alkali metal salt and/or alkaline earth metal salt of anion represented by the formula (1) is preferable, and lithium salt is more preferable. Such lithium salt is preferably the compositions mentioned in the above-mentioned materials for electrolytic solution other than the above-mentioned lithium salt of anion.

In the case of compounds other than ionic material-containing composition, an electrolyte salt showing a high dissociation constant in electrolytic solutions or a polymer solid electrolyte is preferable. Thus, suited for use are as mentioned in the materials for electrolytic solution.

The above-mentioned ionic material-containing composition may contain a further electrolyte salt. Preferred as such are as mentioned above in the materials for electrolytic solutions.

The amount of the above-mentioned electrolyte salt present is preferably such that the lower limit of the electrolyte salt is 0.1% by mass, and the upper limit is 50% by mass, relative to 100% by mass of the ionic material-containing composition. When it is less than 0.1% by mass, the absolute ion amount will be insufficient, possibly leading to a low ionic conductivity. When it exceeds 50% by mass, the migration of ions may be inhibited to a great extent. The upper limit is more preferably 30% by mass.

When the above-mentioned ionic material-containing composition contains the proton, it can suitably serve as a material of a hydrogen cell-constituting ionic conductor. In the present invention, the proton can occur in the ionic material-containing composition when the ionic material-containing composition contains a compound capable of proton generation upon dissociation.

The amount of the proton present in the above-mentioned ionic material-containing composition is as mentioned above in the above-mentioned materials for electrolytic solutions.

The above-mentioned ionic material-containing composition is solidified by inclusion of a polymer, and the composition can be preferably used as a polymer solid electrolyte. In addition, by inclusion of an organic solvent, ionic conductivity is further improved.

As the polymer, for example, preferred are one or two or more species of a polyvinyl polymer such as polyacrylonitrile, poly(meth)acrylic acid esters, polyvinyl chloride, and polyvinylidene fluoride; polyoxymethylene; a polyether polymer such as polyethylene oxide, and polypropylene oxide; a polyamide polymer such as nylon 6, and nylon 66; a polyester polymer such as polyethylene terephthalate; polystyrene, polyphosphazenes, polysiloxane, polysilane, polyvinylidene fluoride, polytetrafluoroethylene,a polycarbonate polymer,and anionene polymer.

When the above-mentioned ionic material-containing composition is used as a polymer solid electrolyte, the amount of the polymer present is preferably such that the lower limit is 0.1% by mass, and the upper limit is 5000% by mass relative to 100% by mass of the ionic material-containing composition. When the amount is less than 0.1% by mass, there is a possibility that effect of solidification is not sufficiently obtained. When the amount exceeds 5000% by mass, there is a possibility that ionic conductivity is reduced. The more preferable lower limit value is 1% by mass, and the more preferable upper limit value is 1000% by mass.

As the above-mentioned organic solvent, preferable is a compound having better compatibility with a constitutional element in the ionic material-containing composition of the present invention, a great permittivity, high solubility of an electrolyte salt, a boiling point of 60°C or more, and a wide electrochemical stable range. More preferable is an organic solvent (non-aqueous solvent) having a low moisture content. Specific examples of such an organic solvent include solvents as described above in the above-mentioned electrolytic solution material of the (A) form, and one or two or more species thereof may be used. In particular, carbonic acid esters, aliphatic esters and ethers are more preferable, carbonates such as ethylene carbonate and propylene carbonate are furthermore preferable, and cyclic esters such as γ-butyrolactone and γ-valerolactone are most preferable.

The above-mentioned ionic material-containing composition may include one or two or more species of constitutional elements other than those as described above as far as the action and effect of the present invention are exhibited. For example, by inclusion of various inorganic oxide fine particles (=inorganic oxide in minute particle form), the composition may be also used as a composite electrolyte, thereby, not only a strength and film thickness uniformity are improved, but also fine voids are generated between inorganic oxide and the above-mentioned polymer. And, particularly when a solvent is added, a free electrolytic solution is dispersed in voids in a composite electrolyte, and ionic conductivity and mobility may be also improved without deteriorating strength improving effect.

A preferable form of the inorganic oxide fine particle is as described above in the above-mentioned material for an electrolytic solution.

The amount of the inorganic oxide fine particle to be added is preferably such that the upper limit is 50% by mass relative to 100% by mass of a polymer solid electrolyte comprising the ionic material-containing composition. When the amount exceeds 50% by mass, there is a possibility that a strength and ionic conductivity of a polymer solid electrolyte are reduced, and a film becomes difficult to make. More preferable is 30% by mass, and the lower limit value is preferably 0.1% by mass.

The above-mentioned ionic material-containing composition may contain various additives in addition to the above-mentioned salts and solvents. The purpose of addition of additives is versatile, and examples thereof include improvement in electric conductivity, improvement in heat stability, suppression of deterioration of an electrode due to hydration or dissolution, suppression of gas generation, improvement in withstand voltage, and improvement in wettability. As such additives, one or two or more species of compounds mentioned above in the above-mentioned material for an electrolytic solution may be used.

The content of the above-mentioned additives are not limited, but for example, is preferably in the range of 0.1 to 2% by mass and more preferably in the range of 0.5 to 10% by mass relative to 100% by mass of the ionic material-containing composition.

In the above-mentioned ionic material-containing composition of the present invention, the ionic conductivity at 0°C is preferably 0.5 mS/cm or more. When the ionic conductivity is less than 0.5 mS/cm, there arises the possibility of the ionic conductor prepared by using the ionic material-containing composition of the present invention failing to stably function while retaining a sufficient level of ionic conductivity with the lapse of time. More preferably, the ionic conductivity is 2.0 mS/cm or more.

The above-mentioned ionic conductivity can judiciously be measured by the complex impedance method using an impedance analyzer called HP4294A (trademark, product of Toyo Corp.).

The above-mentioned ionic material-containing composition preferably has a viscosity of 200 mPa·s or less. When the electrolytic solution has a viscosity of more than 200 mPa·s, the ionic conductivity may be improved sufficiently. The viscosity is more preferably 100 mPa·s or less, and furthermore preferably 50 mPa·s or less, and most preferably 10 mPa·s or less.

The method of measurement of the above-mentioned viscosity is not particularly restricted but the method mentioned above in the above-mentioned material for an electrolytic solution of the (A) form can judiciously be used.

In the above-mentioned ionic material-containing composition, a difference between the upper limit and the lower limit of a potential window as measured by cyclic voltammetry (hereinafter, referred to as "CV") is preferably 2 V or more, more preferably 2.2V or more, further preferably 2.4V or more.

The CV measurement of potential window is preferably performed by employing a standard voltammetry tool called HSV-100 (trade name; manufactured by Hokuto Denko Corporation) using a 3 electrodes-cell under 30°C atmosphere. Measurement conditions in this case are as follows:

### (Measurement conditions)

Working electrode: glassy carbon electrode
Reference electrode: Ag electrode
Counter electrode: platinum electrode
Scanning rate: 100 mV/s
Scanning range: natural potential to 3 V, natural potential to -3 V

The production method for the ionic material-containing composition of the present invention is not particularly limited, but preferred is a method comprising a step of deriving an ionic material from a compound having the anion represented by the formula (1). Thereby, it becomes possible that an ionic material has a form preferable as a molten salt or a salt constituting a solid electrolyte. Such a production method preferably comprises a step of deriving an ionic material from a compound having the anionic structure represented by the formula (1) using a halide, for example, comprises a step of reacting a compound having the anion represented by the formula (1) with a halide or a carbonic acid compound, and the halide or carbonic acid compound preferably has an onium cation, or a cation comprising at least one metal atom selected from alkali metal atoms, alkaline earth metal atoms, transition metal atoms and rare metal atoms. One or two or more species of these preparation raw materials may be used, respectively.

In the present invention, the above-mentioned production method preferably uses an anion-exchange resin.

As the above-mentioned compound having the anion represented by the formula (1), a compound represented by the formula (8) is preferable; 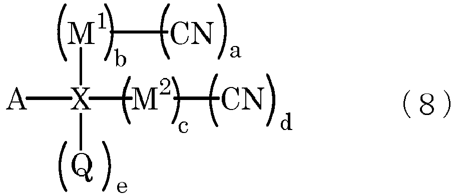 in this case, examples of A in the formula (8) represents a hydrogen atom, at least one metal atom selected from alkali metal atoms, alkaline earth metal atoms, transition metal atoms and rare metal atoms, or a group having no metal element such as an ammonium group. From a viewpoint of suppression of an impurity content of the ionic material, a group having no metal element is preferable . In the formula (8), X, M¹' M², Q, a, b, c, d and e are as described above.

The above-mentioned production method may comprise a step of preparing a compound having the anion represented by the formula (1), which is used in the step of deriving an ionic material from a compound having the anion represented by the formula (1). In this case, a compound having the anion represented by the formula (1) is preferably prepared by reacting the above-mentioned compound having the anion represented by the formula (1) with a halide. Thereby, it becomes possible to appropriately set a structure of the anion represented by the formula (1) in the ionic material depending on performance or the like required for the ionic material-containing composition. In this case, an anion possessed by a compound having the anion which is a preparation raw material in the step of preparing a compound having the anion represented by the formula (1), and the anion represented by the formula (1) in the ionic material are not same.

In the above-mentioned step, one form of a chemical reaction formula in the step of deriving an ionic material from a compound having the anion represented by the formula (1) is shown by the following formula (1), and one form of a chemical reaction formula in the step of preparing a compound having the anion represented by the formula (1) is shown in the following formula (2).

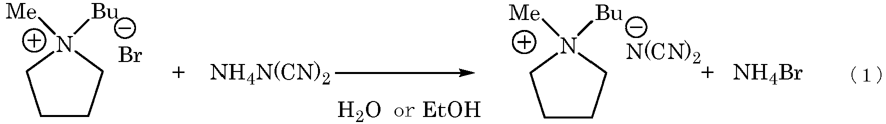

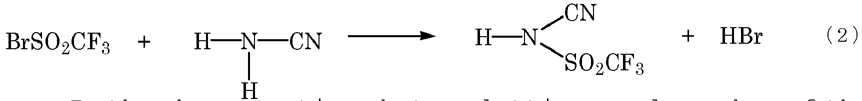

In the above-mentioned step, letting a mole number of the compound having the anion represented by the formula (1) to be "a", and letting a mole number of the halide to be "b", a mole ratio (a/b) in the reaction is preferably 100/1 to 0.1/1. When the compound having the anion is less than 0.1, there is a possibility that the halide becomes too excessive, and a product is not obtained effectively, and there is a possibility that a halogen is mixed into the ionic material-containing composition, and poisons an electrode and the like. When the compound exceeds 100, there is a possibility that the compound having the anion becomes too excessive, and further improvement in a yield cannot be expected, and there is a possibility that a metal ion is mixed into the ionic material-containing composition, and performance of an electrochemical device is lowered. The mole ratio is more preferably 10/1 to 0.5/1.

The reaction condition of the above-mentioned step may be appropriately set depending on preparation raw materials and other reaction condition. And the reaction temperature is preferably -20 to 200°C, more preferably 0 to 100°C, furthermore preferably 10 to 60°C. The reaction pressure is preferably 1 × 10² to 1 × 10⁸ Pa, more preferably 1 × 10³ to 1 × 10⁷ Pa, furthermore preferably 1 × 10⁴ to 1 × 10⁸ Pa. The reaction time is preferably 48 hours or less, more preferably 24 hours or less, further preferably 12 hours or less.

In the above-mentioned step, a reaction solvent is usually used. And as the reaction solvent, preferred are (1) aliphatic hydrocarbon such as hexane and octane; (2) alicyclic saturated hydrocarbon such as cyclohexane; (3) alicyclic unsaturated hydrocarbon such as cyclohexne; (4) aromatic hydrocarbon such as benzene, toluene and xylene; (5) ketone such as acetone and methyl ethyl ketone; (6) ester such as methyl acetate, ethyl acetate, butyl acetate and γ-butyrolactone; (7) halogenated hydrocarbon such as dichloroethane, chloroform and carbon tetrachloride; (8) ether such as diethyl ether, dioxane and dioxolane; (9) ether of alkylene glycol such as propylene glycol monomethyl ether acetate and diethylene glycol monomethyl ether acetate; (10) alcohol such as methyl alcohol, ethyl alcohol, butyl alcohol, isopropyl alcohol, ethylene glycol and propylene glycol monomethyl ether; (11) amide such as dimethylformamide and N-methylpyrrolidone; (12) sulfonic acid ester such as dimethyl sulfoxide; (13) carbonic acid ester such as dimethyl carbonate and diethyl carbonate; (14) alicyclic carbonic acid ester such as ethylene carbonate and propylene carbonate; (15) nitrile such as acetonitrile; (16) water, and the like. These may be used alone, or two or more of them may be used. Among these, (5), (6), (10), (11), (12), (13), (14), (15) and (16) are preferable. More preferable are (5), (10), (15) and (16).

In the production method for the ionic material-containing composition, after the above-mentioned steps, the treatment such as filtration of precipitates and the like, removal of a solvent, dehydration and drying under reduced pressure may be performed. For example, an ionic material-containing composition comprising an ionic material may be obtained by filtering produced precipitates, removing a solvent from a solvent containing an ionic material under condition such as vacuum, washing the material by dissolving in a solvent such as dichloromethane, adding a substance having dehydration effect such as MgSO₄, dehydrating the resultingproducts, and performing drying under reduced pressure after removal of the solvent. The time of the washing treatment with a solvent may be appropriately set. And as the solvent, preferred are chloroform, ketone such as tetrahydrofuran and acetone, ether such as ethylene glycol dimethyl ether, acetonitrile, water and the like as well as dichloromethane. In addition, as the substance having dehydration effect, preferred are molecular sieve, CaCl₂, CaO, CaSO₄, K₂CO₃, active alumina, silica gel and the like as well as MgSO₄, and the addition amount of the substance may be appropriately set depending on a kind of a product and a solvent.

Since the ionic material-containing composition of the present invention can exhibit the above-mentioned properties, it can be preferably applied to a variety of utilities and, for example, it can be used as an ion-conducting material. That is, an ion-conducting material comprising the ionic material-containing composition is also one aspect of the present invention. The ionic material-containing composition is preferably used as an ion-conducting material, and it is also preferably used in a material other than the ion-conducting material.

Herein, an ion-conducting material is a material for an electrolytic solution or an electrolyte, and can be preferably used as a material for a solvent and/or an electrolyte constituting an electrolytic solution (material for ionic conductor), or as a material for a solid electrolyte (material for electrolyte) in an ionic conductor of electrochemical devices.

The material for an electrolytic solution and ion-conducting material of the present invention are further described below.

The material for an electrolytic solution and ion-conductingmaterial of the present invention are judiciously used as an ionic conductor material in constituting cells or batteries having charge/discharge mechanisms, such as primary cells, lithium (ion) secondary batteries and fuel cells, electrolytic condensers, electric double layer capacitors, solar cells, electrochromic display devices and other electrochemical devices. Among them, they are preferably used tolithiumsecondary battery,electrolytic condenseror electric double layer capacitor. That is, a lithium secondary battery, electrolytic condenser or electric double layer capacitor using the material for an electrolytic solution or the ionic conductor material also constitutes a further aspect of the present invention.

In cases where an electrochemical device is constituted using the material for an electrolytic solution or ion-conducting material of the present invention, a preferred form of the electrochemical device comprises, as basic constituent elements, an ionic conductor, a negative electrode, a positive electrode, current collectors, separators and a container.

Preferred as the above-mentioned ionic conductor is a mixture of an electrolyte and an organic solvent. When an organic solvent is used, this ionic conductor becomes that which is generally called "electrolytic solution". When a polymer is used, this conductor becomes that which is called "polymer solid electrolyte". The polymer solid electrolytes include those having an organic solvent as a plasticizer. The material for an electrolytic solution or the ion-conducting material of the present invention can judiciously be used as a substitute for the electrolyte or organic solvent in the electrolytic solution in such ionic conductor, and the ion-conducting material according to the present invention is also used as a polymer solid electrolyte. In an electrochemical device in which the material for an electrolytic solution or ion-conducting material according to the present invention are used as an ion-conducting material, at least one of these is constituted of the material for electrolytic solutions or ion-conducting material according to the present invention. Among these, use as a substitute for the organic solvent in the electrolytic solution, or as a polymer solid electrolyte is preferable.

The above-mentioned organic solvent may be any of those aprotic solvents capable of dissolving the material for an electrolytic solution or ion-conducting material according to the present invention, and the same organic solvents as mentioned hereinabove are preferred. However, when two or more solvents are used as a mixed solvent or the electrolyte comprises the Li ion, the electrolytic solution is preferably prepared by dissolving that material in a mixed solvent composed of an aprotic solvent having a permittivity of 20 or more and an aprotic solvent having a permittivity of 10 or less as selected from among such organic solvents. In particular when a lithium salt is used, its solubility in an aprotic solvent having a permittivity of 10 or less, such as diethyl ether or dimethyl carbonate, is low and no sufficient ionic conductivity is obtained. Conversely, its solubility in an aprotic solvent having a permittivity of 20 is high but the solution shows a high viscosity, hence the migration of ions becomes difficult and also in this case, no sufficient ionic conductivity is obtained. When these are mixed together, appropriate levels of solubility and mobility can be secured and a sufficient level of ionic conductivity can be obtained.

The electrolyte concentration in the above-mentioned ionic conductor is preferably not less than 0.01 mole/dm³ but not more than the saturation concentration. Concentration less than 0.01 mole/dm³ is undesirable, since the ionic conductivity is low at such concentration. More preferably, it is not less than 0.1 mole/dm³ but not more than 1.5 mole/dm³.

In the case of lithium batteries, metallic lithium or an alloy of lithium and another metal is suitable as the material of the above-mentioned negative electrode. In the case of lithium ion batteries, polymers, organic materials, carbon obtained by baking pitch or the like, natural graphite, metal oxides, and like materials in which the phenomenon called intercalation is utilized are appropriate. In the case of electric double layer capacitors,activated carbon,porousmetal oxides, porous metals and conductive polymers are judiciously used.

Suitable as the above-mentioned positive electrode material in the case of lithium batteries and lithium ion batteries are lithium-comprising oxides such as LiCoO₂, LiNiO₂, LiMnO₂ and LiMn₂O₄; such oxides as TiO₂, V₂O₅ and MoO₃; such sulfides as TiS₂ and FeS; and conductive polymers such as polyacetylene, polyparaphenylene, polyaniline and polypyrrole. In the case of electric double layer capacitors, activated carbon, porous metal oxides, porous metals and conductive polymers are preferred.

In the following, described in detail are (1) a lithium secondary battery, (2) an electrolytic condenser and (3) an electric double layer capacitor, in which the material for an electrolytic solution or ion-conducting material according to the present invention is used.

### (1) Lithium secondary battery

A lithium secondary battery is constituted of the following basic constituent elements: a positive electrode, a negative electrode, separators occurring between the positive and negative electrodes, and an ionic conductor in which the material for an electrolytic solution or ionic conductor material according to the present invention is used. In this case, a lithium salt is contained as an electrolyte in the material for an electrolytic solution or ionic conductor material according to the present invention. Preferred as such a lithium secondary battery is a nonaqueous electrolyte lithium secondary battery, which is other than an aqueous electrolyte lithium secondary battery. A form of such lithium secondary battery is schematically shown, in cross section, in Fig. 1. In this lithium secondary battery, coke is used as the negative electrode active substance to be mentioned later herein, and a Co-comprising compound as the positive electrode active substance. During charge of such lithium secondary battery, the reaction C₆Li → 6C + Li + e occurs on the negative electrode, the electron (e) generated on the negative electrode surface migrates through the electrolytic solution to the positive electrode surface in the manner of ionic conduction. On the positive electrode surface, the reaction CoO₂ + Li + e → LiCoO₂ occurs. An electric current thus flows from the negative electrode to the positive electrode. During discharge, the reverse reactions occur, and an electric current runs from the positive electrode to the negative electrode. In this manner, electricity can be stored or supplied by such ion-involving chemical reactions.

The above-mentioned negative electrode is preferably produced by applying a negative electrode mixture comprising a negative electrode active substance, a negative electrode conductor material and a negative electrode binder, among others, to the surface of a negative electrode current collector. The negative electrode mixture may comprise one or more of various additives in addition to the conductor and binder.

Suitable as the above-mentioned negative electrode active substance are metallic lithium and other materials capable of occluding and releasing lithium ions. Suited for use as the materials capable of occluding and releasing the above-mentioned lithium ions are metallic lithium; pyrolytic carbon; coke species such as pitch coke, needle coke and petroleum coke; graphite; glassy carbon; organic polymer-derived baking products which are produced by baking phenolic resins, furan resins and the like at an appropriate temperature to converting them into carbon;carbonfibers;carbon materialssuch asactivated carbon; polymers such as polyacetylene, polypyrrole and polyacene; lithium-comprising transition metal oxides or transition metal sulfides, e.g. Li_{4/3}Ti_{5/3}O₄ and TiS₂; metals capable of alloying with alkali metals, e.g. Al, Pb, Sn, Bi and Si; cubic intermetallic compounds capable of intercalating alkali metals, e.g. AlSb, Mg₂Si and NiSi₂, and lithium nitrogen compounds such as Li_{3-f}G_{f}N (G: transitionmetal). These may be used singly or in combination of two or more of them. Among these, metallic lithium and carbonaceous materials, which can occlude and release alkali metal ions, are more preferred.

The above-mentioned negative electrode conductor material may be any electron conductive material. Preferred are graphite species, e.g. natural graphite such as flaky graphite, and artificial graphite; carbon black species such as acetylene black, Ketjen black, channel black, furnace black, lamp black and thermal black; conductive fibers such as carbon fibers and metal fibers; carbon fluoride; powder-form metals such as copper and nickel; and organic conductive materials such as polyphenylene derivatives, among others. These may be used singly or two or more them may be used combinedly. Among these, artificial graphite, acetylene black and carbon fibers are more preferred. The negative electrode conductor is used preferably in an amount of 1 to 50 parts by weight, more preferably 1 to 30 parts by weight, per 100 parts by weight of the negative electrode active substance. Since the negative electrode active substance has electric conductivity, it is not always necessary to use a negative electrode conductor.

The above-mentioned negative electrode binder may be either a thermoplastic resin or a thermosetting resin. Preferred are polyethylene, polypropylene, polytetrafluoroethylene, polyvinylidene fluoride, styrene-butadiene rubbers, tetrafluoroethylene-hexafluoropropylene copolymers, tetrafluoroethylene-perfluoroalkyl vinyl ether copolymers, vinylidene fluoride-hexafluoropropylene copolymers, vinylidene fluoride-chlorotrifluoroethylene copolymers, ethylene-tetrafluoroethylene copolymers, polychlorotrifluoroethylene, vinylidene fluoride-pentafluoropropylene copolymers, propylene-tetrafluoroethylene copolymers, ethylene-chlorotrifluoroethylene copolymers, vinylidene fluoride-hexafluoropropylene-tetrafluoroethylene copolymers, vinylidene fluoride-perfluoromethyl vinyl ether-tetrafluoroethylene copolymers, ethylene-acrylic acid copolymers, ethylene-methacrylic acid copolymers, ethylene-methyl acrylate copolymers, ethylene-methyl methacrylate copolymers, polyamides, polyurethanes, polyimides, polyvinylpyrrolidone and a copolymer thereof and the like. These may be used singly or in combination of two or more of them. Among these, more preferred are styrene-butadiene rubbers, polyvinylidene fluoride, ethylene-acrylic acid copolymers, ethylene-methacrylic acid copolymers, ethylene-methyl acrylate copolymers, ethylene-methyl methacrylate copolymers, polyamides, polyurethanes, polyimides, polyvinylpyrrolidone and a copolymer thereof.

The above-mentioned negative electrode current collector mentioned above may be made of any electron conductor that will not cause any chemical change within the cell or battery. Preferred are, among others, stainless steel, nickel, copper, titanium, carbon, conductive resins, and copper or stainless steel with carbon, nickel, titanium or the like adhering to or covering the surface thereof. Among these, copper and copper-comprising alloys are more preferred. These may be used singly or in combination of two or more of them. These negative electrode current collectors may be used after oxidation of the surface thereof. Furthermore, it is desirable that the collector surface be made uneven. The negative electrode current collector preferably has the form of a foil, film, sheet, net, punched body, lath, porous body, foamed body, or molded fiber group, for instance. Preferably, the current collector has a thickness of 1 to 500 µm.

The above-mentioned positive electrode mentioned above is preferably produced by applying a positive electrode mixture comprising a positive electrode active substance, a positive electrode conductor material, a positive electrode binder and so forth to the surface of a positive electrode current collector. The positive electrode mixture may comprise one or more of various additives in addition to the conductor and binder.

Suited for use as the above-mentioned positive electrode active substance are, among others, metallic Li, LiₓCoO₂, LiₓNiO₂, LiₓMnO₂, Li_{X}Co_{y}Ni_{1-y}O₂, LiₓCo_{y}J_{1-y}O_{z}, LiₓNi_{1-y}J_{y}O_{z}, LiₓMn₂O₄, LiₓMn_{2-y}J_{y}O_{4;} and lithium-free oxides such as MnO₂, V_{g}Oₕ and Cr_{g}Oₕ (g and h each being an integer of not less than 1). These may be used singly or in combination of two or more of them.

The above symbol J represents at least one element selected from among Na, Mg, Sc, Y, Mn, Fe, Co, Ni, Cu, Zn, Al, Cr, Pb, Sb and B. The number x is within the range 0 ≤ x ≤ 1.2, y within the range 0 ≤ y ≤ 0.9, and z within the range 2.0 ≤ z ≤ 2.3, and the value of x varies as a result of cell or battery charge or discharge. Also employable as the positive electrode active substance are transition metal chalcogenides, vanadium oxides or niobium oxides, which may comprise lithium, conjugated polymer-based organic conductive substances, Chevrel phase compounds, and the like. The positive active substance particles preferably have an average particle diameter of 1 to 30 µm.

The above-mentioned positive electrode conductor material may be any of those electron-conductive materials which will not cause any chemical change at the charge/discharge voltage for the positive electrode active substance employed. Suitable are, among others, the same ones as mentioned hereinabove referring to the negative electrode conductor material; metals in powder form, such as aluminum and silver; conductive whiskers such as zinc oxide and potassium titanate; and conductive metal oxides such as titanium oxide. These may be used singly or two or more of them may be used combinedly. Among these, artificial graphite, acetylene black and nickel in powder form are more preferred. The positive electrode conductor material is preferably used in an amount of 1 to 50 parts by weight, more preferably 1 to 30 parts by weight, per 100 parts by weight of the positive electrode active substance. When carbon black or graphite is used, 2 to 15 parts by weight thereof is preferably used per 100 parts by weight of the positive electrode active substance.

The above-mentioned positive electrode binder may be either a thermoplastic resin or a thermosetting resin. Suitable are those mentioned hereinabove referring to the negative electrode binder other than styrene-butadiene rubbers and, further, tetrafluoroethylene-hexafluoroethylene copolymers. They may be used singly or in combination of two or more of them. Among them, polyvinylidene fluoride and polytetrafluoroethylene are more preferred.

The positive electrode current collector mentioned above may be made of any electron conductor that will not cause any chemical change at the charge/discharge voltage levels for the positive electrode active substance employed. Suitable are, among others, stainless steel, aluminum, titanium, carbon, conductive resins, and aluminum or stainless steel with carbon, titanium or the like adhering to or covering the surface thereof. These may be used singly or in combination of two or more of them. Among them, aluminum and aluminum-comprising alloys are preferred. These positive electrode current collectors may be used after oxidation of the surface thereof. Furthermore, it is desirable that the collector surface be made uneven. The positive electrode current collector may have the same form and thickness as mentioned above referring to the negative electrode current collector.

The above-mentioned separators each is preferably made of a microporous insulating thin membrane showing a high level of ion permeability and a required level of mechanical strength and preferably functioning to close its pores at temperatures exceeding a certain level and thereby increase the resistance. (In this case, in the above-mentioned ion-conducting material, this preferable embodiment is the case where an electrolytic solution is used as a ionic conductor.) Suited for use as the material thereof from the organic solvent resistance and hydrophobicity viewpoint are, among others, porous synthetic resin films made of a polyolefin such as polyethylene or polypropylene, woven or nonwoven fabrics made of an organic material such as polypropylene or a fluorinated polyolefin, and woven or nonwoven fabrics made of glass fibers or an inorganic material. The separators preferably have a pore diameter within a range such that they are impermeable to the positive electrode active substance, negative electrode active substance, binders and conductor materials dropped away from the electrodes. The pore diameter is thus preferably 0.01 to 1 µm. The separator thickness is preferably 5 to 300 µm, more preferably 10 to 50 µm. The void content is preferably 30 to 80%.

The separator surface is preferably modified in advance by corona discharge treatment, plasma discharge treatment, or wet treatment using a surfactant so that the hydrophobicity thereof may be reduced. Such treatment can improve the wettability of the separator surface and pore inside, making it possible to prevent, to the utmost, the internal resistance of the cell or battery from increasing.

In the constitution of the above-mentioned lithium secondary battery, an electrolytic solution-carrying polymer material gel may be comprised in the positive electrode mixture or negative electrode mixture, or a porous separator made of an electrolytic solution-carrying polymer material may be integrated with the positive electrode or negative electrode. The above-mentioned polymer material may be any one capable of holding the electrolytic solution and preferably is a vinylidene fluoride-hexafluoropropylene copolymer, for instance.

As for the form of the above-mentioned lithium secondary battery, there may be mentioned the coin form, button form, sheet form, layer-built form, cylindrical form, flat form, rectangular form, large form for use in an electric vehicle, and so forth.

### (2) Electrolytic condenser (Electrolytic capacitor)

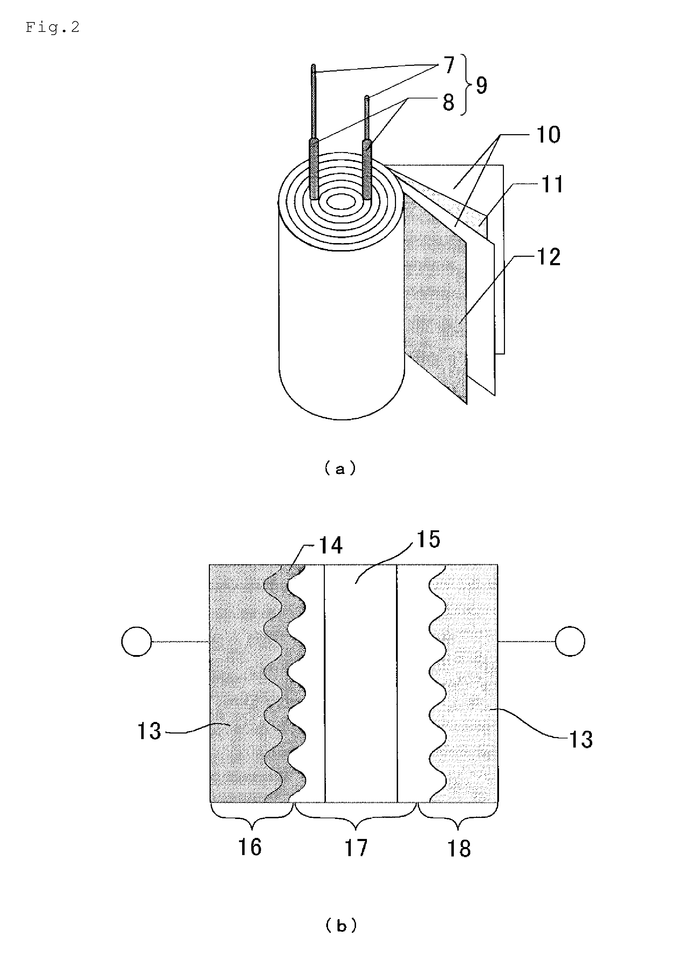

An electrolytic condenser is constituted of the following fundamental constituent elements: a condenser element (including an anode foil, a cathode foil, an electrolytic paper sheet sandwiched between the anode foil and cathode foil and serving as a separator, and lead wires), an ionic conductor using a material for the electrolytic solution or the ion-conducting material of the present invention, an exterior case of a cylinder shape with a bottom, and a sealing body for sealing the exterior case. Fig. 2 (a) is aperspectiveviewof one formof the condenser element. The electrolytic condenser of the present invention may be obtained by impregnating a condenser element with an electrolytic solution using the material for an electrolytic solution or the ion-conductingmaterial of the present invention, serving as an ionic conductor, and accommodating the condenser element into an exterior case of a cylinder shape with a bottom, packaging a sealing body in an opening part of the exterior case and, at the same time, subjecting an end part of the exterior case to embossing procession and sealing the exterior case. Preferred as such electrolytic condenser is an aluminum electrolytic condenser, a tantalate electrolytic condenser, and niobium electrolytic condenser. One form of such aluminum electrolytic condenser is schematically shown, in cross section, in Fig. 2 (b). In a preferred form of such aluminum electrolytic condenser, a thin oxide (aluminum oxide) film or layer to serve as a dielectric is formed, by electrolytic anodic oxidation, on the aluminum foil surface roughened by rendering the same uneven by electrolytic etching.

As the anode foil, an anode foil obtained by chemically or electrochemically etching an aluminum foil having a purity of 99% or more in an acidic solution to perform plane extending treatment, performing formation treatment in an aqueous solution of ammonium borate, ammonium phosphate, ammonium adipate or the like and forming an anode oxidized film layer on the surface thereof.

As the cathode foil, an aluminum foil in which a film made of one or more species of metal nitrides selected from titanium nitride, zirconium nitride, tantalum nitride and niobium nitride and/or one or more species of metals selected from titanium, zirconium, tantalum and niobium is formed on a part or all of surface can be used.

Examples of forming method of the film include a deposition method, a plating method, a coating method and the like. As a part on which the film is formed, a whole surface of the cathode foil may be covered, as necessary, a part of the cathode foil, for example, only one side of the cathode foil may be covered with metal nitride or a metal.

The lead wire is preferably one comprising a connecting part making contact with the anode foil and the cathode foil, a round bar part and an external connecting part. This lead wire is electrically connected to the anode foil and the cathode foil by means of such as a stitch and ultrasound welding, respectively, at the connecting part. In addition, the connecting part and the round bar part in the lead wire are preferably made of high purity aluminum, and the external connecting part is preferably made of a copper-plated iron steel wire which has been subjected to solder plating. An aluminum oxide layer formed by anode oxidizing treatment with an aqueous ammoniumborate solution, an aqueous ammoniumphosphate solution or an aqueous ammonium adipate solution may be formed on a part or all of the surface of the connecting part with the cathode foil and the round bar part, or an insulating layer such as a ceramic coating layer made of Al₂O₃, SiO₂ and ZrO₂ or the like may be formed on a part or all of the surface of the connecting part with the cathode foil and the round bar part.

The exterior case is preferably made of aluminum.

The sealing body is preferably provided with a through hole from which the lead wire leads out, and made of elastic rubber such as butyl rubber. And, as the butyl rubber, used may be a rubber elastic body produced by adding a reinforcing agent (carbon black or the like), a bulking agent (clay, talc, calcium carbonate or the like), a procession assistance (stearic acid, zinc oxide or the like), a vulcanizing agent or the like to crude rubber comprising a copolymer of isobutylene and isoprene, kneading the mixture, and rolling and molding the resulting mixture. As the vulcanizing agent, used may be an alkylphenol formalin resin; peroxide (dicumyl peroxide, 1,1-di-(t-butylperoxy)-3,3,5-trimethylcyclohexane, 2,5-dimethyl-2,5-di-(t-butylperoxy)hexane or the like); quinoide (p-quinonedioxime, p,p'-dibenzoylquinonedioxime or the like); sulfur and the like. And, more preferably, when a surface of the sealing body is coated with a resin such as teflon (registered trademark), or a plate of bakelite or the like is applied thereto, permeability of a solvent steam is reduced.

As the separator, paper such as manila paper and kraft paper is usually used, and a non-woven fabric of a glass fiber, polypropylene, polyethylene or the like may be used.

The electrolytic condenser may be of a hermetic sealing structure, or of a structure in which the condenser is sealed in a resin case (described, for example, in Japan Kokai Publication No. 8-148384). In the case of an aluminum electrolytic condenser having a rubber sealing structure, since a gas is permeated through rubber to some extent, there is a possibility that a solvent is volatilized from the interior of a condenser into the air under high temperature environment, or a moisture is mixed into the interior of a condenser from the air under high temperature and high humidity environment. And there is a possibility that a capacitor causes an unpreferable change in property such as reduction in electrostatic capacity under such a severe environment. On the other hand, in a capacitor of a hermetic sealing structure or a structure in which the condenser is sealed into a resin case, since a permeation amount of a gas is extremely small, stable property is exhibited also on such a severe environment.

### (3) Electric double layer capacitor

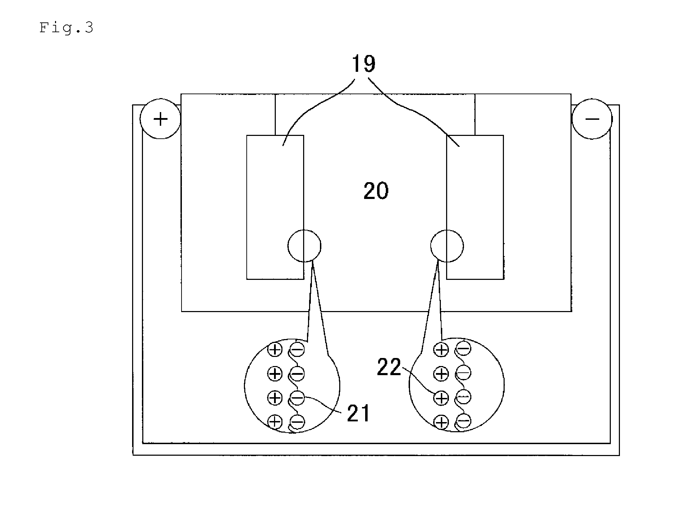

An electric double layer capacitor is constituted of the following fundamental constituent elements: a negative electrode, a positive electrode, and an ionic conductor prepared by using the material for an electrolytic solution or ion-conducting material according to the present invention. In a preferred form, the electrolytic solution, which is an ionic conductor, is comprised in an electrode element composed of the positive electrode and negative electrode opposed to each other. A schematic sectional view of one form of such electric double layer capacitor and a schematic enlargement of the electrode surface are shown in Fig. 3.

The above-mentioned positive electrode and negative electrode each is a polarizable electrode constituted of active, or activated, carbon to serve as an electrode active substance, such as active carbon fibers, a molding of active carbon particles, or active carbon particles, a conductor material and a binder substance, and is preferably used in such a molded form as a thin coat film, a sheet or a plate. In the electric double layer capacitor having such constitution, electric energy, or charge, is stored in the electric double layer formed at the interface between each polarizable electrode and the electrolytic solution as a result of physical adsorption and desorption of ions, as shown in the enlargement given in Fig. 3.

The above-mentioned active carbon preferably has an average pore diameter of 2.5 nm or less. The average pore diameter of active carbon is preferably measured by the BET method based on the adsorption of nitrogen. As for the specific surface area of active carbon, it may vary depending, among others, on the electrostatic capacity of the carbonaceous species per unit area (F/m²) and on the decrease in bulk density due to the increase in specific surface area but, when the specific surface area is determined by the BET method based on the adsorption of nitrogen, it is preferably 500 to 2500 m²/g, more preferably 1000 to 2000 m²/g.

The above-mentioned active carbon is preferably produced by the activation method which comprises carbonizing a plant material, such as wood, sawdust, coconut shells or pulping waste liquor, a fossil fuel material, such as coal, heavy petroleum oil, or a pyrolyzate derived therefrom, e.g. coal pitch, petroleum pitch, petroleum coke, carbon aerogel, mesophase carbon or tar pitch fiber, a synthetic polymer material, such as a phenol resin, furan resin, polyvinyl chloride resin, polyvinylidene chloride resin, polyimide resin, polyamide resin, ion exchange resin, liquid crystal polymer, plastic waste or waste tires, or the like, followed by activation.

The above-mentioned activation method includes (1) the gas activation method which comprises bringing a carbonized material into contact and reaction with steam, carbon dioxide, oxygen or another oxidizing gas at elevated temperatures and (2) the chemical activation method which comprises uniformly impregnating a carbonized material with zinc chloride, phosphoric acid, sodium phosphate, calcium chloride, potassium sulfide, potassium hydroxide, sodium hydroxide, potassium carbonate, sodium carbonate, sodium sulfate, potassium sulfate, calcium carbonate, boric acid, nitric acid or the like and heating the mixture in an inert gas atmosphere to give active carbon as a result of the dehydration and oxidation reactions in the presence of the chemical. Either of the methods may be used.

The active carbon obtained by the above-mentioned activation method is preferably heat-treated under an inert gas atmosphere, such as nitrogen, argon, helium or xenon, at 500 to 2500°C, more preferably 700 to 1500°C, to thereby eliminate unnecessary surface functional groups and/or develop the crystallinity of carbon for increasing the electronic conductivity. The active carbon may be in a crushed, granulated, granular, fibrous, felt-like, woven or sheet form, for instance. When it occurs as granules, it preferably has an average grain diameter of 30 µm or less from the viewpoint of electrode bulk density improvement and internal resistance reduction.

In addition to active carbon species, carbonaceous materials having such a high specific surface area as mentioned above may be used as the electrode active substance. For example, carbon nanotubes or diamond produced by plasma CVD may also be used.

Preferred as the above-mentioned conductor material are, among others, carbon black species, such as acetylene black and Ketjen black, natural graphite, thermally expansible graphite, carbonfibers, rutheniumoxide, titaniumoxide, aluminum, nickel or like metal fibers. These may be used singly or in combination of two or more of them. Among these, acetylene black and Ketjen black are more preferred since they can effectively improve the conductivity in small amounts. The level of addition of the conductor material may vary according to the bulk density of the active carbon but preferably is 5 to 50% by mass, more preferably 10 to 30% by mass, relative to 100% by mass of the active carbon.

Suited for use as the above-mentioned binder substance are polytetrafluoroethylene, polyvinylidene fluoride, carboxymethylcellulose, fluoroolefin copolymer crosslinked polymers, polyvinyl alcohol, polyacrylic acid, polyimides, polyamides, polyurethanes, polyvinylpyrrolidone and a copolymerthereof,petroleum pitch,coalpitch,and phenolresins, among others. These may be used singly or in combination of two or more of them. The level of addition of the binder substance may vary according to the active carbon species and the form thereof, among others, but is preferably 0.5 to 30% by mass, more preferably 2 to 30% by mass, relative to 100% by mass of the active carbon.

Preferred as the method of forming the positive electrode and negative electrode mentioned above are, among others, (1) the method which comprises admixing polytetrafluoroethylene with a mixture of active carbon and acetylene black and subjecting the resulting mixture to press forming, (2) the method which comprises admixing active carbon with pitch, tar, phenolic resin or like binder substance, molding the mixture and subjecting the moldings to heat treatment in an inert atmosphere to give a sintered mass, and (3) the method which comprises sintering an active carbon-binder substance mixture or active carbon alone for electrode formation. When an active carbon fiber cloth obtained by activation treatment of a carbon fiber cloth is used, the cloth as it is may be used as the electrode without using any binder substance.

In the above-mentioned electric double layer capacitor, the polarizable electrodes are preferably prevented from contacting or short-circuiting with each other by inserting a separator between the polarizable electrodes or by opposing the polarizable electrodes with a space between them using a holding means, for instance. Suited for use as the separator are porous thin films which will not chemically react with the molten salt or any other constituent in the temperature range for use. Suitable separator materials are paper, polypropylene, polyethylene and glass fibers, among others.

The form of the electric double layer capacitor includes the coin type, wound type, rectangular type, aluminum laminate type and so forth. Any form may be employed.

The lithium secondary battery, electrolytic condenser, electric double layer capacitor and other electrochemical devices in which the material for an electrolytic solution or ion-conducting material according to the present invention is used can judiciously be used in various fields of application, including portable information terminals, portable electronic apparatus or tools, small-sized household electric power storages, motorcycles, electric vehicles, hybrid electric vehicles and the like.

Since the material for an electrolytic solution of the (A) form in the present invention has the above-mentioned construction, ionic conductivity is improved and, shows excellent properties at low temperatures, and the material is stable with the lapse of time, therefore, the material is preferable as a material for an electrolytic solution constituting ionic conductors, and corrosivity on an electrode and the like is not present, decomposition of an electrolyte salt is suppressed also at a high potential, and the material is also electrochemically stable. In addition, in the material for an electrolytic solution of the form (B) of the present invention, ionic conductivity is improved, corrosivity on an electrode and the like is not present, the material is stable with the lapse of time, decomposition of an electrolyte salt is suppressed also at high potential, and the material is also electrochemically stable. Further, the ionic material-containing composition and the ion-conducting material of the present invention can exhibit excellent fundamental performance such as electrochemical stability, and can be preferably used in a variety of utilities. Accordingly, such materials for electrolytic solutions, the ionic material-containing composition and ion-conducting material are judiciously used in constituting cells or batteries having charge/discharge mechanisms, such as primary cells, lithium (ion) secondary batteries and fuel cells, electrolytic condensers, electric double layer capacitors, solar cells, electrochromic display devices and other electrochemical devices.

### BRIEF DESCRIPTION OF DRAWINGS

Fig. 1 is a schematic cross-sectional view of one form of the lithium secondary battery.
Fig. 2 (a) is a schematic perspective view of one form of the electrolytic condenser, and Fig. 2 (b) is a schematic cross-sectional view of one form of the aluminum electrolytic condenser.
Fig. 3 is a schematic cross-sectional view of one form of the electric double layer capacitor, with an enlarged view of the electrode surface.

In addition, the symbols in the figures are as follows.
(A): Discharge
(B): Charge
1: Negative electrode collector (copper)
2: Negative electrode (active substance)
3: Separator
4: Electrolyte (electrolytic solution) (Li salt such as LiPF₆)
5: Positive electrode (active substance)
6: Positive electrode collector (aluminum)
7: External connecting part
8: Round bar part
9: Lead wire
10: Electrolytic paper
11: Cathode foil
12: Anode foil
13: Aluminum foil
14: Dielectric (aluminum oxide)
15: Electrolytic paper
16: Anode foil
17: Electrolytic solution
18: Cathode foil
19: Activated carbon electrode
20: Electrolytic solution
21: Anion
22: Cation

### BEST MODE FOR CARRYING OUT THE INVENTION

The following examples illustrate the present invention more specifically. They are, however, by no means limitative of the scope of the invention. In the examples, "part (s) " means "part(s) by weight" and "%" represents "% by mass", unless otherwise specified.

### Example 1

Ion-exchanged water of 1% by mass was mixed into ethylmethylimidazolium dicyanamide to produce an ion-conducting material. The ion-conducting material was measured for ionic conductivity, and the ionic conductivities were 2.6 × 10⁻² S/cm (25°C), 1.3 × 10⁻² S/cm (0°C), 5.5 × 10⁻³ S/cm (-20°C), and 2.7 × 10⁻⁶ S/cm (-55°C). Results are shown in Table 1-1.

The ionic conductivity was measured by the complex impedance method using an impedance analyzer called SI1260 (trademark, product of Solartron Co., Ltd.) in which SUS electrodes were used.

### Examples 2 to 19 and Comparative Examples 1 to 4

According to the same manner as in Example 1 except that a kind and an amount of an ionic liquid and a solvent shown in Table 1-1 were used, ionic conductivity was measured. These results are shown in Table 1-1.

**Table 1-1**

| | Ionic liquid | Solvent | | Ion conductivity(S/cm) | | | |
|---|---|---|---|---|---|---|---|
| | | Species | % by mass | 25°C | 0°C | - 20°C | -55°C |
| Example 1 | EMImDCA | Ion-exchange water | 1 | 2.6 × 10⁻² | 1.3 × 10⁻² | 5.5 × 10⁻³ | 2.7 × 10⁻⁶ |
| Example 2 | EMImL7CA | Ion-exchange water | 10 | 3.4 × 10⁻² | 2.2 × 10⁻² | 1.1 × 10⁻² | 1.2 × 10⁻³ |
| Example 3 | EMImDCA | GBL | 1 | 2.3 × 10⁻² | 1.1 × 10⁻² | 4.5 × 10⁻³ | 5.8 × 10⁻⁷ |
| Example 4 | EMImDCA | GBL | 10 | 2.6 × 10⁻² | 1.1 × 10⁻² | 4.5 × 10⁻³ | 5.2 × 10⁻⁵ |
| Example 5 | EMImDCA | GBL | 50 | 7.4 × 10⁻² | 4.4 × 10⁻² | 2.4 × 10⁻² | 4.2 × 10⁻³ |
| Example 6 | EMImDCA | GBL | 65 | 7.0 × 10⁻² | 4.4 × 10⁻² | 2.7 × 10⁻² | 6.1 × 10⁻³ |
| Example 7 | EMPyDCA | GBL | 65 | 5.8 × 10⁻² | 3.6 ×10⁻² | 2.2 × 10⁻² | 5.0 × 10⁻³ |
| Example 8 | EMImTCM | GBL | 50 | 7.0 × 10⁻² | 4.3 × 10⁻² | 2.4 × 10⁻² | 4.3 × 10⁻³ |
| Example 9 | EMImTCM | GBL | 65 | 6.7 × 10⁻² | 4.3 × 10⁻² | 2.7 × 10⁻² | 6.2 × 10⁻³ |
| Example 10 | EMImTCM | GBL | 75 | 6.1 × 10⁻² | 4.0 × 10⁻² | 2.6 × 10⁻² | 7.5 × 10⁻³ |
| Example 11 | EMImTCM | GBL | 85 | 5.6 × 10⁻² | 3.7 × 10⁻² | 2.5 × 10⁻² | 9.1 × 10⁻³ |
| Example 1 2 | MeMeImDCA | GBL | 65 | 7.3 × 10⁻² | 4.6 × 10⁻² | 2.7 × 10⁻² | 6.1 × 10⁻³ |
| Example 13 | EMImDCA | GBL | 75 | 6.4 × 10⁻² | 4.1 × 10⁻² | 2.6 × 10⁻² | 7.4 × 10⁻² |
| Example 14 | TEMADCA | GBL | 75 | 5.7 × 10⁻² | 3.6 × 10⁻² | 2.3 × 10⁻² | 5.6 × 10⁻³ |
| Example 15 | EMImOCN | GBL | 50 | 3.4 × 10⁻² | 9.7 × 10⁻³ | 2.8 × 10⁻³ | 4.1 × 10⁻⁴ |
| Example 16 | EMImOCN | GBL | 65 | 3.4 × 10⁻² | 9.9 × 10⁻³ | 3.2 × 10⁻³ | 5.9 × 10⁻⁴ |
| Example 17 | EMImOCN | GBL | 75 | 3.0 × 10⁻² | 9.0 × 10⁻³ | 3.1 × 10⁻³ | 7.3 × 10⁻⁴ |
| Example 18 | EMImDCA | EG | 10 | 2.7 × 10⁻² | 1.3 × 10⁻² | 4.5 × 10⁻³ | 5.7 × 10⁻⁶ |
| Example 19 | TMImDCA | GBL | 65 | 6.0 × 10⁻² | 3.8 × 10⁻² | 2.4 × 10⁻² | 5.1 × 10⁻³ |
| Comparative Example 1 | EMImDCA | Ion-exchange water | 0.01 | 2.2 × 10⁻² | 1.1 × 10⁻² | 4.3 × 10⁻³ | cannot be mesured |
| Comparative Example 2 | EMImDCA | GBL | 0.01 | 1.8 × 10⁻² | 1.0 × 10⁻² | 3.9 × 10⁻³ | cannot be mesured |
| Comparative Example 3 | EMImDCA | GBL | 0.1 | 2.5 × 10⁻² | 1.2 × 10⁻² | 4.6 × 10⁻³ | cannot be mesured |
| Comparative Example 4 | EMImDCA | EG | 0.01 | 2.1 × 10⁻² | 1.0 × 10⁻² | 3.8 × 10⁻³ | cannot be mesured |

Table 1-1 is described below.
EMImDCA: ethylmethylimidazolium dicyanamide
EMPyDCA: ethylmethylpyrrolidinium dicyanamide
EMImTCM: ethylmethylimidazolium tricyanomethide
MeMeImDCA: methylmethylimidazolium dicyanamide
TEMADCA: triethylmethylammonium dicyanamide
TMImDCA: trimethylimidazolium dicyanoamine
GBL: γ-butyrolactone
EG: ethylene glycol

### Example A

Ethylmethylimidazolium tricyanomethide (EMImTCM) was diluted by 2% by mass in mobile phase, and a peak reduction ratio after heat resistance test was determined by LC (liquid chromatography) analysis. These results are shown in Table 1-2. Additionally, heat resistance test and LC analysis were performed under the following condition. And a peak reduction ratio is determined in the above-mentioned manner.

### (Heat resistance test)

A sample was kept at 150°C for 50 hours using a dryer called DNF-400 (trade name; manufactured by Yamato Scientific Co., Ltd.).

### (LC analysis)

Measuring instrument: manufactured by Tosoh Corp.
Detector: UV-8020 (ultraviolet absorption 254 nm)
Mobile phase: 10% aqueous solution of methanol
Current: 1.0 mol

### Example B

The LC (liquid chromatography) analysis was performed in the same manner as in Example A, except that ethylmethylimidazolium dicyanamide (EMImDCA) was used, and a peak reduction ratio was determined. These results were shown in Table 1-2.

**Table 1-2**

| | Sample (Ionic compound/Solvent) | Mixing ratio (% by mass) | Accelerating condition | Peak reduction ratio(%) |
|---|---|---|---|---|
| Example A | EM imTCM/GBL | 35/65 | 150°C × 50 hou rs | 17 |
| Example B | EM imDCA/GBL | 35/65 | 150°C × 50 hours | 38 |

### Example 20

Ethylmethylimidazolium dicyanamide and methylpropylpyrrolidiniumdicyanamide were mixed at amass ratio of 50 : 50 to produce an ion-conducting material. This ion-conductingmaterial was measured for ionic conductivity and, the ionic conductivities were 2.2 × 10⁻² S/cm (25°C), 1.0 × 10⁻² S/cm (0°C) , 4.0 × 10⁻³ S/cm (-20°C) and 1.6 × 10⁻⁴ S/cm (-55°C). These results are shown in Table 2.

Measurement of ionic conductivity was performed in the same manner as in Example 1. Cyclic voltammetry measurement was performed under measurement method and condition described above in the above-mentioned (B-5) form.

### Examples 21 to 30 and Comparative Examples 5 to 8

According to the same manner as in Example 20 except that a composition and a mixing ratio shown in Table 2 were used, ionic conductivity was measured. Results are shown in Table 2.

**Table 2**

| | Constitution | Mixing ratio (% by mass) | Ion conductivity (S/cm) | | | | | |
|---|---|---|---|---|---|---|---|---|
| | | | 25°C | 20°C | 0°C | -10°C | -20^{°}C | -55°C |
| Example 20 | EMImDCA/ MPrPyDCA | 50/50 | 2.2 × 10⁻² | - | 1.0 × 10⁻² | - | 4.0 × 10⁻³ | 1.6 × 10⁻⁴ |
| Example 21 | EMImDCA/ MPrPyDCA | 80/20 | 2.5 × 10⁻² | 1.6 ×10⁻² | 1.2 × 10⁻² | - | 5.4 × 10⁻³ | 6.7 × 10⁻⁵ |
| Example 22 | EMImDCA/ MBPyDCA | 50/50 | - | 1.5 × 10⁻² | - | - | 4.7 × 10⁻³ | 9.0 × 10⁻⁵ |
| Example 23 | EMImDCA/ EMImTCM | 50/50 | 2.1 × 10⁻² | - | 9.5 × 10⁻³ | 4.0 × 10⁻³ | - | 7.7 × 10⁻⁵ |
| Example 24 | EMImDCA/ EMPyDCA | 50/50 | 2.5 × 10⁻² | - | 1.2 × 10⁻² | 5.2 × 10⁻³ | - | 2.9 × 10⁻⁻⁴ |
| Example 25 | EMImDCA/ MBPyTFSI | 50/50 | 1.0 × 10⁻² | - | 4.8 × 10⁻³ | 1.7 × 10⁻³ | - | 4.3 × 10⁻⁵ |
| Example 27 | MPrPyDCA/ DEMEDCA | 50/50 | 1.3 × 10⁻³ | - | 4.9 × 10⁻³ | 1.5 × 10⁻³ | - | 2.8 × 10⁻⁵ |
| Example 28 | EMImTFSI/ MBPyTFSI | 50/50 | 5.8 × 10⁻³ | - | 2.1 × 10⁻³ | 5.7 × 10⁻⁴ | - | 8.1 × 10⁻⁶ |
| Example 29 | EMImTFSI/ TMHATFSI | 50/50 | 2. 8 ×10⁻³ | - | 1.4 × 10⁻³ | 3.3 × 10⁻⁴ | - | 3.8 × 10⁻⁶ |
| Example 30 | EMImDCA/ MPrPyDCA/ Water | 50/50/1. 1 | 2.2 × 10⁻² | - | 1.0 × 10⁻² | - | 5.2 × 10⁻³ | 2.0 × 10⁻⁴ |
| Comparative Example 5 | EMImTFSI | - | 6.5 × 10⁻³ | - | 3.0 × 10⁻³ | 9.1 × 10⁻⁴ | - | cannot be mesured |
| Comparative Example 6 | MBPyTFSI | - | 2.5 × 10⁻³ | - | 7.1 × 10⁻⁴ | 1.6 × 10⁻⁴ | - | cannot be mesured |
| Comparative Example 7 | TMMATFSI | - | 1.8 × 10⁻³ | - | cannot be mesured | cannot be mesured | - | cannot be mesured |
| Comparative Example 8 | EMImBzt | - | 2.3 × 10⁻⁴ | - | 1.2 × 10⁻⁵ | - | cannot be mesured | cannot be mesured |

Table 2 is described below.
EMImDCA: 1-ethyl-3-methylimidazolium dicyanamide
MPrPyDCA: methylpropylpyrrolidinium dicyanamide
MBPyDCA: methylbutylpyrrolidinium dicyanamide
EMImTCM: 1-ethyl-3-methylimidazolium tricyanomethide
EMPyDCA: ethylmethylpyrrolidinium dicyanamide
EMImTFSI: 1-ethyl-3-methylimidazolium
bis(trifluoromethanesulfonylimide)
MBPyTFSI: methylbutylpyrrolidinium
bis(trifluoromethanesulfonylimide)
DMEPrADCA: dimethylethylpropylammonium dicyanamide
DEMEDCA: diethylmethyl(2-methoxyethyl)ammonium dicyanamide
TMHATFSI: trimethylhexylammonium
bis(trifluoromethanesulfonylimide)
EMImBzt: 1-ethyl-3-methylimidazolium benzoate

### Examples 31 to 39 and Comparative Example 9

Using a composition shown in Table 3, ion-conducting material was prepared, and measured for CV on an oxidation side. In addition, according to the following standard, an effect of suppressing degradation of electrolytic solution due to voltage application was determined. Results are shown in Table 3.
⊚ (excellent): An effect of suppressing electrolytic solution degradation due to voltage application is high (a peak current reduction ratio at third cycle is 60% or more).
○ (good) : Theeffectofsuppressingelectrolyticsolution degradation due to voltage application is slightly high (a peak current reduction ratio at third cycle is 20% or more).
× (poor) : Theeffectofsuppressingelectrolyticsolution degradation due to voltage application is low (a peak current reduction ratio at third cycle is 5% or more).

**Table 3**

| | Sample | Mixing ratio (% by mass) | Peak current(mA) | | | | | Determination |
|---|---|---|---|---|---|---|---|---|
| | | | 1 cycle | 2cycle | 3cycle | 4cycle | 5cycle | |
| Example 31 | EMImDCA/EMImTCM | 50/50 | 0.85 | 0.00 | 0.00 | - | - | ⊚ |
| Example 32 | EMImDCA/EMImTCM | 10/90 | 1.19 | 0.00 | 0.00 | - | - | ⊚ |
| Example 33 | EMImDCA/EMImTCM | 5/95 | 1.12 | 0.00 | 0.00 | - | - | ⊚ |
| Example 34 | EMImOCN/EMImTCM | 10/90 | 0.82 | 0.13 | 0.00 | 0.00 | 0.00 | ⊚ |
| Example 35 | EMImOCN/EMImTCM | 5/95 | 0.94 | 0.80 | 0.31 | 0.06 | 0.00 | ⊚ |
| Example 36 | EMImDCA | 100 | 0.07 | 0.00 | 0.00 | - | - | ⊚ |
| Example 37 | EMImTCM | 100 | 1.00 | 0.97 | 0.79 | - | - | ○ |
| Example 38 | EMImOCN/GBL | 35/65 | 0.07 | 0.0 | 0.0 | - | - | ⊚ |
| Example 39 | *¹EMImDCA/TCM(1:1)/GBL | 35/65 | 0.97 | 0.0 | 0.0 | 0.0 | 0.0 | ⊚ |
| Comparative Example 9 | EMImTFSI | 100 | 0.17 | 0.30 | 0.35 | 0.35 | 0.35 | × |

Table 3 is described below.
EMImOCN: 1-ethyl-3-methylimidazolium sodium cyanate
GBL: γ-butyrolactone
*1"EMImDCA/TCM (1 : 1) /GBL (mixingratio: 35/65) "means amixture of a mixture produced by mixing of EMImDCA and EMImTCM at a mass ratio of 1 : 1, and GBL, at a mixing ratio of 35/65.

Other symbols are the same as those in Table 2.

### Synthesis Example 1 <Synthesis of EMImTCM>

An anion-exchange resin (trade name "AMBERLITE IRA-400-OH" manufactured by Organo Corp.) was charged into a column tube, and a 5% aqueous solution of 3.3 g of sodium tricyanomethide (NaTCM) was passed therethrough at SV = 2 (2-fold amount of ion-exchange resin). Then, the column was washed by passing ion exchange water (200 ml) at SV = 5 (5-fold amount of ion-exchange resin), and a 1% aqueous solution of EMImBr (1.5 g) was passed therethrough at SV = 2. The resulting solution was concentrated in an evaporator to give the product of ethylmethylimidazoliumtricyanomethide (hereinafter, referred to as "EMImTCM").

### Example 40

EMImTCM produced in Synthesis Example 1 (ion-exchange resin method) were measured for moisture content and impurity content and, as a result, moisture content was 0.6% by mass, and impurity content was not more than detection limit (10 ppm or less). This ion-conducting material was measured for a potential window, and results are show in Table 4.

A potential window, an impurity content and a moisture content were measured under the measuring method and conditions as described above in the above-mentioned ionic material-containing composition.

### Comparative Example 10

Using EMImTCM containing 0.6% by mass of a moisture produced in the above process, impurities were adjusted so that a chlorine matter was 0.5% by mass. This ion-conducting material was measured for a potential window, and results are shown in Table 4.

### Comparative Examples 11 and 12

According to the same manner as in Comparative Example 10 except that impurities described in Table 4 were used, adjustment was performed. This ion-conducting material was measured for a potential window, and results are shown in Table 4.

**Table 4**

| | Sample | Impurity | Impurity concentration (% by mass) | Moisture concentration (% by mass) | Potential window(V) |
|---|---|---|---|---|---|
| Example 40 | EMImTCM | None | - | 0.6 | -2.2~0.4 |
| Comparative Example 10 | EMImTCM | Cl | 0.5 | 0.6 | -1.3~0.2 |
| Comparative Example 11 | EMImTCM | AgNO₃ | 0.5 | 0.6 | -0.2~0.2 |
| Comparative Example 12 | EMImTCM | Br | 0.5 | 0.6 | -1.0~0.2 |

Table 4 shows that in cyclic voltammogram (CV curve) of impurity content in the ion-conducting materials of Comparative Examples 10 to 12, potential window is narrower as compared with that of Example 40 (= a sample containing no impurities).

The present application claims priority under 35 U.S.C. § 119 to Japanese Patent Application No.2004-140384 filed May 10, 2004, entitled "MATERIAL FOR ELECTROLYTIC SOLUTION", Japanese Patent Application No.2004-145161 filed May 14, 2004, entitled "MATERIAL FOR ELECTROLYTIC SOLUTION", Japanese Patent Application No.2004-366537 filed December 17, 2004, entitled "IONIC MATERIAL-CONTAINING COMPOSITION, ION-CONDUCTING MATERIAL AND USE THEREOF", Japanese Patent Application No.2004-376882 filed December 27, 2004, entitled "MATERIAL FOR ELECTROLYTIC SOLUTION", and Japanese Patent Application No.2005-000628 filed January 5, 2005, entitled "MATERIAL FOR ELECTROLYTIC SOLUTION". The contents of that applications are incorporated herein by reference in their entirely.

## Claims

1. A material for an electrolytic solution containing an ionic compound,
which comprises a cyano group-containing anion represented by the formula (1): 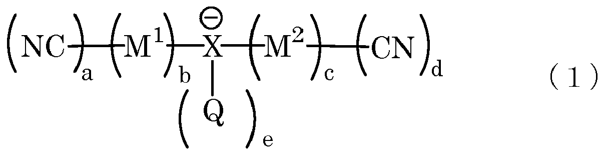 wherein, in the formula:
- X represents at least one element selected from among B, C, N, 0, Al, Si, P, S, As and Se;
M¹ and M² are the same or different and each represents an organic linking group;
Q represents **at least one** organic group **selected from the group consisting of: a hydrogen atom, a halogen atom, C**ₚ**F**_{(2p+1-q)}**H**_{q}, **OC**ₚ**F**_{(2p+1-q)}**H**_{q}, **SO₂C**ₚ**F**₍₂ₚ₊₁₋q₎**H**_{q}, **CO₂C**ₚ**F**_{(2p+1-q)}**H**_{q}, **COC**ₚ**F**_{(2p+1-q)}**H**_{q}, **SO**₃**C**₆**F**₅₋ᵣ**H**ᵣ, **and NO₂,**
**wherein 1 ≤ p ≤ 6, o < q ≤ 13, and 0 < r ≤ 5;**
a is an integer of not less than 1;
**b and c are both 0;**
d is an integer of not less than 0; and
**e is an integer of not less than 1;**
and 1 to 99% by mass of a solvent in 100% by mass of the material for an electrolytic solution.

2. The material for an electrolytic solution according to claim 1, wherein the organic group Q is OCₚF_{(2p+1-q)}H_{q} or CₚF_{(2p+1-q)}H_{q}.

3. The material for an electrolytic solution according to either of claims 1 or 2, which has 50% or less of a peak reduction ratio after heating at 150°C for 50 hours.

4. A composition containing an ionic material, wherein the ionic material comprises an ionic compound according to any of claims 1 to 3, wherein impurity content in said ionic material is not more than 0.1% by mass and moisture content in said ionic material is 0.05 to 10% by mass.

5. A composition containing an ionic material according to claim 4,
which comprises a cation represented by the formula (3) : 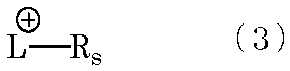 wherein, in the formula:
L represents C, Si, N, P, S or 0;
R groups are the same or different and each represents an organic group and may be bonded together;
s is an integer of 3, 4 or 5 and is a value determined by the valency of the element L.

6. A composition containing an ionic material according to claim 4 or 5, wherein, at 40°C, the ionic material is a liquid state of 200 mPa·s or less.

7. Anion-conductingmaterialcomprisingthecomposition containing an ionic material according to any one of claims 4 to 6.

8. A lithium secondary battery, an electrolytic condenser or an electric double layer capacitor, using the material for an electrolytic solution according to any one of claims 1 to 3, the composition according to any of claims 4 to 6, or the ion-conducting material according to claim 7.
